(19) **Europäisches Patentamt**
**European Patent Office**
**Office européen des brevets**

(11) **EP 3 238 022 B1**

(12) **EUROPEAN PATENT SPECIFICATION**

(45) Date of publication and mention
of the grant of the patent:
**19.02.2020 Bulletin 2020/08**

(51) Int Cl.:
**G06F 7/52** *(2006.01)* **G06F 7/57** *(2006.01)*

(21) Application number: **15873960.7**

(86) International application number:
**PCT/US2015/062055**

(22) Date of filing: **23.11.2015**

(87) International publication number:
**WO 2016/105753 (30.06.2016 Gazette 2016/26)**

(54) **METHOD AND APPARATUS FOR PERFORMING BIG-INTEGER ARITHMETIC OPERATIONS**

VERFAHREN UND VORRICHTUNG ZUR DURCHFÜHRUNG VON ARITHMETISCHEN
BIG-INTEGER-OPERATIONEN

PROCÉDÉ ET APPAREIL POUR EFFECTUER DES OPÉRATIONS ARITHMÉTIQUES SUR DES
GRANDS ENTIERS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.12.2014 US 201414581973**

(43) Date of publication of application:
**01.11.2017 Bulletin 2017/44**

(73) Proprietor: **Intel Corporation
Santa Clara, CA 95054 (US)**

(72) Inventors:
• **GUERON, Shay
32714 Haifa (IL)**
• **KRASNOV, Vlad
36680 Nesher (IL)**

(74) Representative: **Samson & Partner Patentanwälte
mbB
Widenmayerstraße 6
80538 München (DE)**

(56) References cited:
**WO-A1-2013/180712 US-A1- 2003 018 678
US-A1- 2011 264 719 US-A1- 2013 138 711
US-A1- 2013 332 707 US-A1- 2014 006 469
US-A1- 2014 006 755**

• **Darrel Hankerson ET AL: "Guide to Elliptic Curve
Cryptography - Section 5.1", Guide to Elliptic
Curve Cryptography, 1 January 2004
(2004-01-01), pages 205-224, XP055492764, ISBN:
978-0-387-95273-4 Retrieved from the Internet:
URL:http://crypto.cs.mcgill.ca/~simonpie/w
ebdav/ipad/EBook/Crypto/Guide%20to%20Ellip
tic%20Curve%20Cryptography%20-%20D.%20H
ank
erson,%20A.%20Menezes,%20S.%20Vanstone.p
df [retrieved on 2018-07-16]**

**Description**

**BACKGROUND**

**Field of the Invention**

This invention relates generally to the field of computer processors. More particularly, the invention relates to a method and apparatus for performing big integer arithmetic operations.

**Description of the Related Art**

An instruction set, or instruction set architecture (ISA), is the part of the computer architecture related to programming, including the native data types, instructions, register architecture, addressing modes, memory architecture, interrupt and exception handling, and external input and output (I/O). It should be noted that the term "instruction" generally refers herein to macro-instructions - that is instructions that are provided to the processor for execution - as opposed to micro-instructions or micro-ops - that is the result of a processor's decoder decoding macro-instructions. The micro-instructions or micro-ops can be configured to instruct an execution unit on the processor to perform operations to implement the logic associated with the macro-instruction.

The ISA is distinguished from the microarchitecture, which is the set of processor design techniques used to implement the instruction set. Processors with different microarchitectures can share a common instruction set. For example, Intel® Pentium 4 processors, Intel® Core™ processors, and processors from Advanced Micro Devices, Inc. of Sunnyvale CA implement nearly identical versions of the x86 instruction set (with some extensions that have been added with newer versions), but have different internal designs. For example, the same register architecture of the ISA may be implemented in different ways in different microarchitectures using well-known techniques, including dedicated physical registers, one or more dynamically allocated physical registers using a register renaming mechanism (e.g., the use of a Register Alias Table (RAT), a Reorder Buffer (ROB) and a retirement register file). Unless otherwise specified, the phrases register architecture, register file, and register are used herein to refer to that which is visible to the software/programmer and the manner in which instructions specify registers. Where a distinction is required, the adjective "logical," "architectural," or "software visible" will be used to indicate registers/files in the register architecture, while different adjectives will be used to designate registers in a given microarchitecture (e.g., physical register, reorder buffer, retirement register, register pool).

An instruction set includes one or more instruction formats. A given instruction format defines various fields (number of bits, location of bits) to specify, among other things, the operation to be performed and the operand(s) on which that operation is to be performed. Some instruction formats are further broken down though the definition of instruction templates (or subformats). For example, the instruction templates of a given instruction format may be defined to have different subsets of the instruction format's fields (the included fields are typically in the same order, but at least some have different bit positions because there are less fields included) and/or defined to have a given field interpreted differently. A given instruction is expressed using a given instruction format (and, if defined, in a given one of the instruction templates of that instruction format) and specifies the operation and the operands. An instruction stream is a specific sequence of instructions, where each instruction in the sequence is an occurrence of an instruction in an instruction format (and, if defined, a given one of the instruction templates of that instruction format).

US 2014/006755 A1 relates to an apparatus and method for vector multiplication with accumulation in large register space. For example, the apparatus has an instruction execution pipeline that has a vector functional unit to support a vector multiply add instruction. The vector multiply add instruction to multiply respective K bit elements of two vectors and accumulate a portion of each of their respective products with another respective input operand in an X bit accumulator, where X is greater than K.

Darrel Hankerson et al, "Guide to Elliptic Curve Cryptography - Section 5.1", Guide to Elliptic Curve Cryptography, pages 205 - 224, summarizes engineering aspects of implementing cryptographic solutions based on elliptic curves efficiently and securely in specific environments. In particular, an overview of technologies and implementation issues for two types of hardware acceleration are given.

**SUMMARY**

The present invention is defined in the independent claims. The dependent claims define embodiments thereof.

**BRIEF DESCRIPTION OF THE DRAWINGS**

A better understanding of the present invention can be obtained from the following detailed description in conjunction with the following drawings, in which:

**FIGS. 1A and 1B** are block diagrams illustrating a generic vector friendly instruction format and instruction templates thereof according to embodiments of the invention;

**FIG. 2A-D** is a block diagram illustrating an exemplary specific vector friendly instruction format according to embodiments of the invention;

**FIG. 3** is a block diagram of a register architecture according to one embodiment of the invention; and

**FIG. 4A** is a block diagram illustrating both an exemplary in-order fetch, decode, retire pipeline and an exemplary register renaming, out-of-order issue/execution pipeline according to embodiments of the invention;

**FIG. 4B** is a block diagram illustrating both an exemplary embodiment of an in-order fetch, decode, retire core and an exemplary register renaming, out-of-order issue/execution architecture core to be included in a processor according to embodiments of the invention;

**FIG. 5A** is a block diagram of a single processor core, along with its connection to an on-die interconnect network;

**FIG. 5B** illustrates an expanded view of part of the processor core in FIG 5A according to embodiments of the invention;

**FIG. 6** is a block diagram of a single core processor and a multicore processor with integrated memory controller and graphics according to embodiments of the invention;

**FIG. 7** illustrates a block diagram of a system in accordance with one embodiment of the present invention;

**FIG. 8** illustrates a block diagram of a second system in accordance with an embodiment of the present invention;

**FIG. 9** illustrates a block diagram of a third system in accordance with an embodiment of the present invention;

**FIG. 10** illustrates a block diagram of a system on a chip (SoC) in accordance with an embodiment of the present invention;

**FIG. 11** illustrates a block diagram contrasting the use of a software instruction converter to convert binary instructions in a source instruction set to binary instructions in a target instruction set according to embodiments of the invention;

**FIG. 12** illustrates an exemplary processor on which embodiments of the invention may be implemented;

**FIG. 13** illustrates one embodiment of the invention including 256-bit multiplication logic;

**FIG. 14** illustrates another embodiment of the invention including 256-bit multiplication logic;

**FIG. 15** illustrates another embodiment of the invention including 256-bit multiplication logic utilizing an immediate value to identify a source operand;

**FIG. 16** illustrates a set of multipliers and adders used to implement one embodiment of the invention; and

**FIG. 17** illustrates a method in accordance with one embodiment of the invention.

## DETAILED DESCRIPTION

In the following description, for the purposes of explanation, numerous specific details are set forth in order to provide a thorough understanding of the embodiments of the invention described below. It will be apparent, however, to one skilled in the art that the embodiments of the invention may be practiced without some of these specific details. In other instances, well-known structures and devices are shown in block diagram form to avoid obscuring the underlying principles of the embodiments of the invention.

EXEMPLARY PROCESSOR ARCHITECTURES AND DATA TYPES

An instruction set includes one or more instruction formats. A given instruction format defines various fields (number of bits, location of bits) to specify, among other things, the operation to be performed (opcode) and the operand(s) on which that operation is to be performed. Some instruction formats are further broken down though the definition of instruction templates (or subformats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. A set of SIMD extensions referred to the Advanced Vector Extensions (AVX) (AVX1 and AVX2) and using the Vector Extensions (VEX) coding scheme, has been, has been released and/or published (e.g., see Intel® 64 and IA-32 Architectures Software Developers Manual, October 2011; and see Intel® Advanced Vector Extensions Programming Reference, June 2011).

## Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

## A. Generic Vector Friendly Instruction Format

A vector friendly instruction format is an instruction format that is suited for vector instructions (e.g., there are certain fields specific to vector operations). While embodiments are described in which both vector and scalar operations are supported through the vector friendly instruction format, alternative embodiments use only vector operations the vector friendly instruction format.

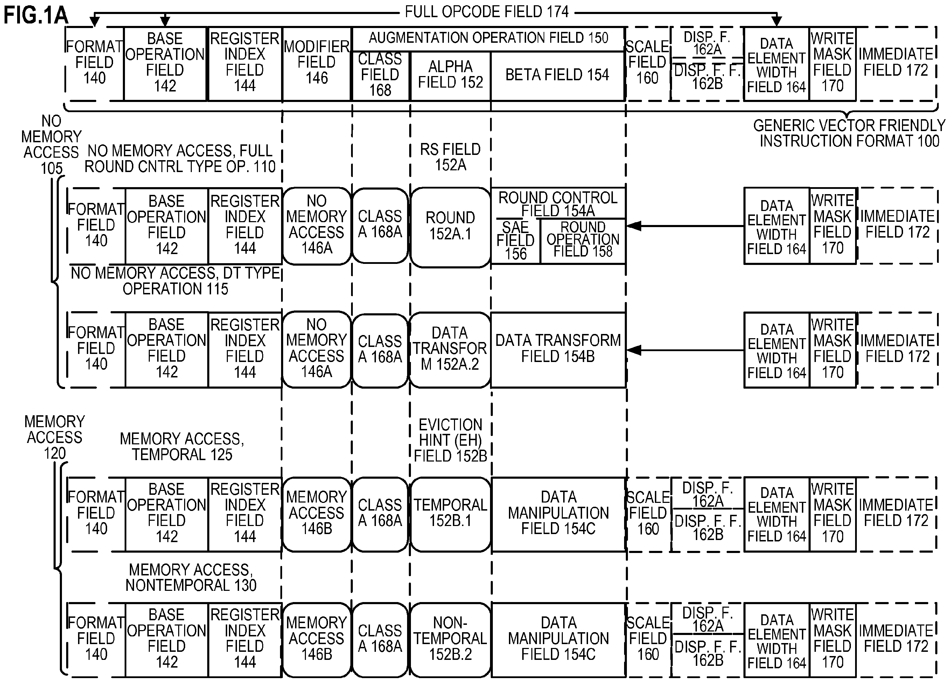

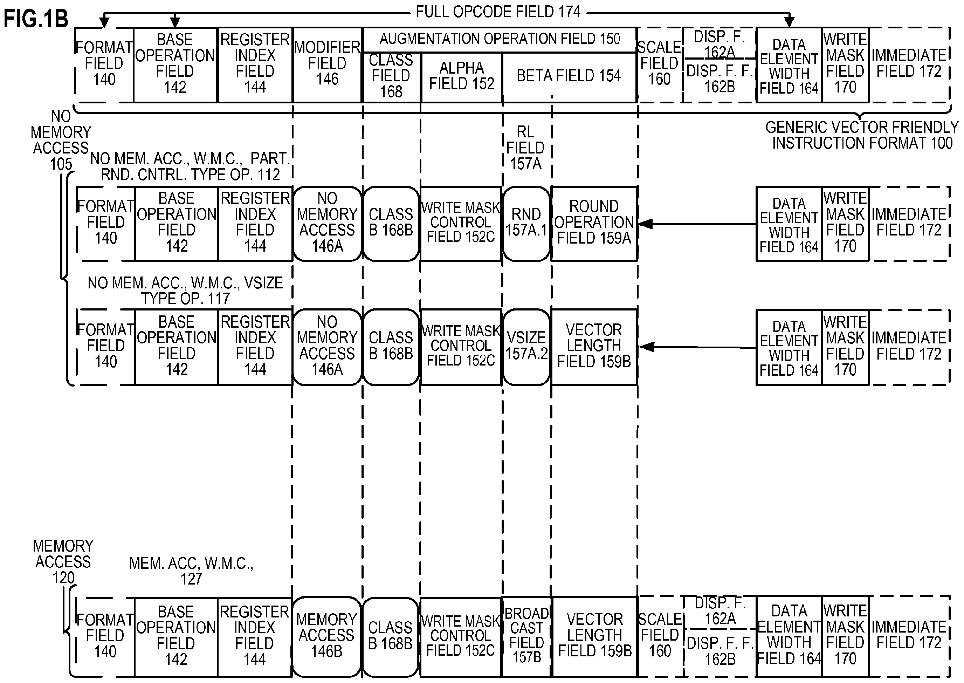

**Figures 1A-1B** are block diagrams illustrating a generic vector friendly instruction format and instruction templates thereof according to embodiments of the invention. **Figure 1A** is a block diagram illustrating a generic vector friendly instruction format and class A instruction templates thereof according to embodiments of the invention; while **Figure 1B** is a block diagram illustrating the generic vector friendly instruction format and class B instruction templates thereof according to embodiments of the invention. Specifically, a generic vector friendly instruction format 100 for which are defined class A and class B instruction templates, both of which include no memory access 105 instruction templates and memory access 120 instruction templates. The term generic in the context of the vector friendly instruction format refers to the instruction format not being tied to any specific instruction set.

While embodiments of the invention will be described in which the vector friendly instruction format supports the following: a 64 byte vector operand length (or size) with 32 bit (4 byte) or 64 bit (8 byte) data element widths (or sizes) (and thus, a 64 byte vector consists of either 16 doubleword-size elements or alternatively, 8 quadword-size elements); a 64 byte vector operand length (or size) with 16 bit (2 byte) or 8 bit (1 byte) data element widths (or sizes); a 32 byte vector operand length (or size) with 32 bit (4 byte), 64 bit (8 byte), 16 bit (2 byte), or 8 bit (1 byte) data element widths (or sizes); and a 16 byte vector operand length (or size) with 32 bit (4 byte), 64 bit (8 byte), 16 bit (2 byte), or 8 bit (1 byte) data element widths (or sizes); alternative embodiments may support more, less and/or different vector operand sizes (e.g., 256 byte vector operands) with more, less, or different data element widths (e.g., 128 bit (16 byte) data element widths).

The class A instruction templates in **Figure 1A** include: 1) within the no memory access 105 instruction templates there is shown a no memory access, full round control type operation 110 instruction template and a no memory access, data transform type operation 115 instruction template; and 2) within the memory access 120 instruction templates there is shown a memory access, temporal 125 instruction template and a memory access, non-temporal 130 instruction template. The class B instruction templates in **Figure 1B** include: 1) within the no memory access 105 instruction templates there is shown a no memory access, write mask control, partial round control type operation 112 instruction template and a no memory access, write mask control, vsize type operation 117 instruction template; and 2) within the memory access 120 instruction templates there is shown a memory access, write mask control 127 instruction template.

The generic vector friendly instruction format 100 includes the following fields listed below in the order illustrated in **Figures 1A-1B.**

Format field 140 - a specific value (an instruction format identifier value) in this field uniquely identifies the vector friendly instruction format, and thus occurrences of instructions in the vector friendly instruction format in instruction streams. As such, this field is optional in the sense that it is not needed for an instruction set that has only the generic vector friendly instruction format.

Base operation field 142 - its content distinguishes different base operations.

Register index field 144 - its content, directly or through address generation, specifies the locations of the source and destination operands, be they in registers or in memory. These include a sufficient number of bits to select N registers from a PxQ (e.g. 32x512, 16x128, 32x1024, 64x1024) register file. While in one embodiment N may be up to three sources and one destination register, alternative embodiments may support more or less sources and destination registers (e.g., may support up to two sources where one of these sources also acts as the destination, may support up to three sources where one of these sources also acts as the destination, may support up to two sources and one destination).

Modifier field 146 - its content distinguishes occurrences of instructions in the generic vector instruction format that specify memory access from those that do not; that is, between no memory access 105 instruction templates and memory access 120 instruction templates. Memory access operations read and/or write to the memory hierarchy (in some cases specifying the source and/or destination addresses using values in registers), while non-memory access operations do not (e.g., the source and destinations are registers). While in one embodiment this field also selects between three different ways to perform memory address calculations, alternative embodiments may support more, less, or different ways to perform memory address calculations.

Augmentation operation field 150 - its content distinguishes which one of a variety of different operations to be performed in addition to the base operation. This field is context specific. In one embodiment of the invention, this field is divided into a class field 168, an alpha field 152, and a beta field 154. The augmentation operation field 150 allows common groups of operations to be performed in a single instruction rather than 2, 3, or 4 instructions.

Scale field 160 - its content allows for the scaling of the index field's content for memory address generation (e.g., for address generation that uses $2^{scale} * index + base$).

Displacement Field 162A- its content is used as part of memory address generation (e.g., for address generation that uses $2^{scale} * index + base + displacement$).

Displacement Factor Field 162B (note that the juxtaposition of displacement field 162A directly over displacement factor field 162B indicates one or the other is used) - its content is used as part of address generation; it specifies a displacement factor that is to be scaled by the size of a memory access (N) - where N is the number of bytes in the memory access (e.g., for address generation that uses $2^{scale} * index + base + scaled\ displacement$). Redundant low-order bits are ignored and hence, the displacement factor field's content is multiplied by the memory operands total size (N) in order to generate the final displacement to be used in calculating an effective address. The value of N is determined by the processor hardware at runtime based on the full opcode field 174 (described later herein) and the data manipulation field 154C. The displacement field 162A and the displacement factor field 162B are optional in the sense that they are not used for the no memory access 105 instruction templates and/or different embodiments may implement only one or none of the two.

Data element width field 164 - its content distinguishes which one of a number of data element widths is to be used (in some embodiments for all instructions; in other embodiments for only some of the instructions). This field is optional in the sense that it is not needed if only one data element width is supported and/or data element widths are supported using some aspect of the opcodes.

Write mask field 170 - its content controls, on a per data element position basis, whether that data element position in the destination vector operand reflects the result of the base operation and augmentation operation. Class A instruction templates support merging-writemasking, while class B instruction templates support both merging- and zeroing-writemasking. When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the write mask field 170 allows for partial vector operations, including loads, stores, arithmetic, logical, etc. While embodiments of the invention are described in which the write mask field's 170 content selects one of a number of write mask registers that contains the write mask to be used (and thus the write mask field's 170 content indirectly identifies that masking to be performed), alternative embodiments instead or additional allow the mask write field's 170 content to directly specify the masking to be performed.

Immediate field 172 - its content allows for the specification of an immediate. This field is optional in the sense that is it not present in an implementation of the generic vector friendly format that does not support immediate and it is not present in instructions that do not use an immediate.

Class field 168 - its content distinguishes between different classes of instructions. With reference to **Figures 1A-B,** the contents of this field select between class A and class B instructions. In **Figures 1A-B,** rounded corner squares are used to indicate a specific value is present in a field (e.g., class A 168A and class B 168B for the class field 168 respectively in **Figures 1A-B**).

### *Instruction Templates of Class A*

In the case of the non-memory access 105 instruction templates of class A, the alpha field 152 is interpreted as an RS field 152A, whose content distinguishes which one of the different augmentation operation types are to be performed (e.g., round 152A.1 and data transform 152A.2 are respectively specified for the no memory access, round type operation 110 and the no memory access, data transform type operation 115 instruction templates), while the beta field 154 distinguishes which of the operations of the specified type is to be performed. In the no memory access 105 instruction templates, the scale field 160, the displacement field 162A, and the displacement scale filed 162B are not present.

No-Memory Access Instruction Templates - Full Round Control Type Operation

In the no memory access full round control type operation 110 instruction template, the beta field 154 is interpreted as a round control field 154A, whose content(s) provide static rounding. While in the described embodiments of the invention the round control field 154A includes a suppress all floating point exceptions (SAE) field 156 and a round operation control field 158, alternative embodiments may support may encode both these concepts into the same field or only have one or the other of these concepts/fields (e.g., may have only the round operation control field 158).

SAE field 156 - its content distinguishes whether or not to disable the exception event reporting; when the SAE field's 156 content indicates suppression is enabled, a given instruction does not report any kind of floating-point exception flag and does not raise any floating point exception handler.

Round operation control field 158 - its content distinguishes which one of a group of rounding operations to perform (e.g., Round-up, Round-down, Round-towards-zero and Round-to-nearest). Thus, the round operation control field 158 allows for the changing of the rounding mode on a per instruction basis. In one embodiment of the invention where a processor includes a control register for specifying rounding modes, the round operation control field's 150 content overrides that register value.

No Memory Access Instruction Templates - Data Transform Type Operation

In the no memory access data transform type operation 115 instruction template, the beta field 154 is interpreted as a data transform field 154B, whose content distinguishes which one of a number of data transforms is to be performed (e.g., no data transform, swizzle, broadcast).

In the case of a memory access 120 instruction template of class A, the alpha field 152 is interpreted as an eviction hint field 152B, whose content distinguishes which one of the eviction hints is to be used (in **Figure 1A,** temporal 152B.1 and non-temporal 152B.2 are respectively specified for the memory access, temporal 125 instruction template and the memory access, non-temporal 130 instruction template), while the beta field 154 is interpreted as a data manipulation field 154C, whose content distinguishes which one of a number of data manipulation operations (also known as primitives) is to be performed (e.g., no manipulation; broadcast; up conversion of a source; and down conversion of a destination). The memory access 120 instruction templates include the scale field 160, and optionally the displacement field 162A or the displacement scale field 162B.

Vector memory instructions perform vector loads from and vector stores to memory, with conversion support. As with regular vector instructions, vector memory instructions transfer data from/to memory in a data element-wise fashion, with the elements that are actually transferred is dictated by the contents of the vector mask that is selected as the write mask.

Memory Access Instruction Templates - Temporal

Temporal data is data likely to be reused soon enough to benefit from caching. This is, however, a hint, and different processors may implement it in different ways, including ignoring the hint entirely.

Memory Access Instruction Templates - Non-Temporal

Non-temporal data is data unlikely to be reused soon enough to benefit from caching in the 1st-level cache and should be given priority for eviction. This is, however, a hint, and different processors may implement it in different ways, including ignoring the hint entirely.

***Instruction Templates of Class B***

In the case of the instruction templates of class B, the alpha field 152 is interpreted as a write mask control (Z) field 152C, whose content distinguishes whether the write masking controlled by the write mask field 170 should be a merging or a zeroing.

In the case of the non-memory access 105 instruction templates of class B, part of the beta field 154 is interpreted as an RL field 157A, whose content distinguishes which one of the different augmentation operation types are to be performed (e.g., round 157A.1 and vector length (VSIZE) 157A.2 are respectively specified for the no memory access, write mask control, partial round control type operation 112 instruction template and the no memory access, write mask control, VSIZE type operation 117 instruction template), while the rest of the beta field 154 distinguishes which of the operations of the specified type is to be performed. In the no memory access 105 instruction templates, the scale field 160, the displacement field 162A, and the displacement scale filed 162B are not present.

In the no memory access, write mask control, partial round control type operation 110 instruction template, the rest of the beta field 154 is interpreted as a round operation field 159A and exception event reporting is disabled (a given instruction does not report any kind of floating-point exception flag and does not raise any floating point exception handler).

Round operation control field 159A - just as round operation control field 158, its content distinguishes which one of a group of rounding operations to perform (e.g., Round-up, Round-down, Round-towards-zero and Round-to-nearest). Thus, the round operation control field 159A allows for the changing of the rounding mode on a per instruction basis. In one embodiment of the invention where a processor includes a control register for specifying rounding modes, the round operation control field's 150 content overrides that register value.

In the no memory access, write mask control, VSIZE type operation 117 instruction template, the rest of the beta field 154 is interpreted as a vector length field 159B, whose content distinguishes which one of a number of data vector lengths is to be performed on (e.g., 128, 256, or 512 byte).

In the case of a memory access 120 instruction template of class B, part of the beta field 154 is interpreted as a broadcast field 157B, whose content distinguishes whether or not the broadcast type data manipulation operation is to be performed, while the rest of the beta field 154 is interpreted the vector length field 159B. The memory access 120 instruction templates include the scale field 160, and optionally the displacement field 162A or the displacement scale field 162B.

With regard to the generic vector friendly instruction format 100, a full opcode field 174 is shown including the format field 140, the base operation field 142, and the data element width field 164. While one embodiment is shown where the full opcode field 174 includes all of these fields, the full opcode field 174 includes less than all of these fields in embodiments that do not support all of them. The full opcode field 174 provides the operation code (opcode).

The augmentation operation field 150, the data element width field 164, and the write mask field 170 allow these features to be specified on a per instruction basis in the generic vector friendly instruction format.

The combination of write mask field and data element width field create typed instructions in that they allow the mask to be applied based on different data element widths.

The various instruction templates found within class A and class B are beneficial in different situations. In some embodiments of the invention, different processors or different cores within a processor may support only class A, only class B, or both classes. For instance, a high performance general purpose out-of-order core intended for general-purpose computing may support only class B, a core intended primarily for graphics and/or scientific (throughput) computing may support only class A, and a core intended for both may support both (of course, a core that has some mix of templates and instructions from both classes but not all templates and instructions from both classes is within the purview of the invention). Also, a single processor may include multiple cores, all of which support the same class or in which different cores support different class. For instance, in a processor with separate graphics and general purpose cores, one of the graphics cores intended primarily for graphics and/or scientific computing may support only class A, while one or more of the general purpose cores may be high performance general purpose cores with out of order execution and register renaming intended for general-purpose computing that support only class B. Another processor that does not have a separate graphics core, may include one more general purpose in-order or out-of-order cores that support both class A and class B. Of course, features from one class may also be implement in the other class in different embodiments of the invention. Programs written in a high level language would be put (e.g., just in time compiled or statically compiled) into an variety of different executable forms, including: 1) a form having only instructions of the class(es) supported by the target processor for execution; or 2) a form having alternative routines written using different combinations of the instructions of all classes and having control flow code that selects the routines to execute based on the instructions supported by the processor which is currently executing the code.

## B. Exemplary Specific Vector Friendly Instruction Format

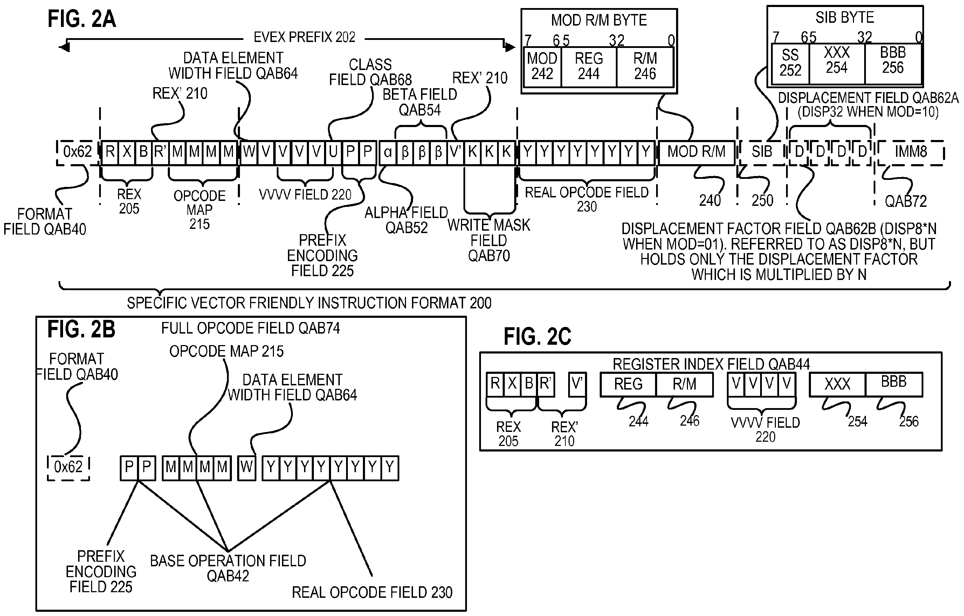

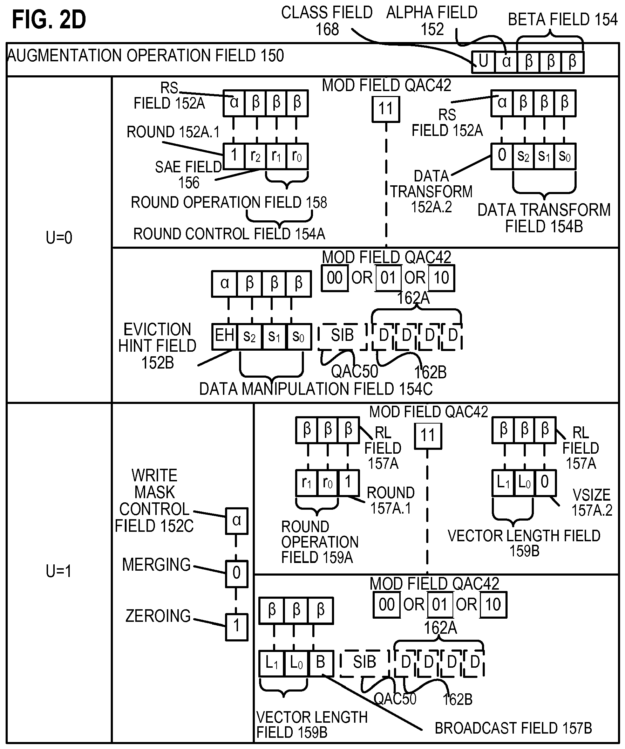

**Figure 2** is a block diagram illustrating an exemplary specific vector friendly instruction format according to embodiments of the invention. **Figure 2** shows a specific vector friendly instruction format 200 that is specific in the sense that it specifies the location, size, interpretation, and order of the fields, as well as values for some of those fields. The specific vector friendly instruction format 200 may be used to extend the x86 instruction set, and thus some of the fields are similar or the same as those used in the existing x86 instruction set and extension thereof (e.g., AVX). This format remains consistent with the prefix encoding field, real opcode byte field, MOD R/M field, SIB field, displacement field, and immediate fields of the existing x86 instruction set with extensions. The fields from **Figure 1** into which the fields from **Figure 2** map are illustrated.

It should be understood that, although embodiments of the invention are described with reference to the specific vector friendly instruction format 200 in the context of the generic vector friendly instruction format 100 for illustrative purposes, the invention is not limited to the specific vector friendly instruction format 200 except where claimed. For example, the generic vector friendly instruction format 100 contemplates a variety of possible sizes for the various fields, while the specific vector friendly instruction format 200 is shown as having fields of specific sizes. By way of specific example, while the data element width field 164 is illustrated as a one bit field in the specific vector friendly instruction format 200, the invention is not so limited (that is, the generic vector friendly instruction format 100 contemplates other sizes of the data element width field 164).

The generic vector friendly instruction format 100 includes the following fields listed below in the order illustrated in **Figure 2A.**

EVEX Prefix (Bytes 0-3) 202 - is encoded in a four-byte form.

Format Field 140 (EVEX Byte 0, bits [7:0]) - the first byte (EVEX Byte 0) is the format field 140 and it contains 0x62 (the unique value used for distinguishing the vector friendly instruction format in one embodiment of the invention).

The second-fourth bytes (EVEX Bytes 1-3) include a number of bit fields providing specific capability.

REX field 205 (EVEX Byte 1, bits [7-5]) - consists of a EVEX.R bit field (EVEX Byte 1, bit [7] - R), EVEX.X bit field (EVEX byte 1, bit [6] - X), and 157BEX byte 1, bit[5] - B). The EVEX.R, EVEX.X, and EVEX.B bit fields provide the same functionality as the corresponding VEX bit fields, and are encoded using 1s complement form, i.e. ZMM0 is encoded as 1111B, ZMM15 is encoded as 0000B. Other fields of the instructions encode the lower three bits of the register indexes as is known in the art (rrr, xxx, and bbb), so that Rrrr, Xxxx, and Bbbb may be formed by adding EVEX.R, EVEX.X, and EVEX.B.

REX' field 110 - this is the first part of the REX' field 110 and is the EVEX.R' bit field (EVEX Byte 1, bit [4] - R') that is used to encode either the upper 16 or lower 16 of the extended 32 register set. In one embodiment of the invention, this bit, along with others as indicated below, is stored in bit inverted format to distinguish (in the well-known x86 32-bit mode) from the BOUND instruction, whose real opcode byte is 62, but does not accept in the MOD R/M field (described below) the value of 11 in the MOD field; alternative embodiments of the invention do not store this and the other indicated bits below in the inverted format. A value of 1 is used to encode the lower 16 registers. In other words, R'Rrrr is formed by combining EVEX.R', EVEX.R, and the other RRR from other fields.

Opcode map field 215 (EVEX byte 1, bits [3:0] - mmmm) - its content encodes an implied leading opcode byte (OF, OF 38, or OF 3).

Data element width field 164 (EVEX byte 2, bit [7] - W) - is represented by the notation EVEX.W. EVEX.W is used to define the granularity (size) of the datatype (either 32-bit data elements or 64-bit data elements).

EVEX.vvvv 220 (EVEX Byte 2, bits [6:3]-vvvv)- the role of EVEX.vvvv may include the following: 1) EVEX.vvvv encodes the first source register operand, specified in inverted (1s complement) form and is valid for instructions with 2 or more source operands; 2) EVEX.vvvv encodes the destination register operand, specified in 1s complement form for certain vector shifts; or 3) EVEX.vvvv does not encode any operand, the field is reserved and should contain 1111b. Thus, EVEX.vvvv field 220 encodes the 4 low-order bits of the first source register specifier stored in inverted (1s complement) form. Depending on the instruction, an extra different EVEX bit field is used to extend the specifier size to 32 registers.

EVEX.U 168 Class field (EVEX byte 2, bit [2]-U) - If EVEX.U = 0, it indicates class A or EVEX.U0; if EVEX.U = 1, it indicates class B or EVEX.U1.

Prefix encoding field 225 (EVEX byte 2, bits [1:0]-pp) - provides additional bits for the base operation field. In addition to providing support for the legacy SSE instructions in the EVEX prefix format, this also has the benefit of compacting the SIMD prefix (rather than requiring a byte to express the SIMD prefix, the EVEX prefix requires only 2 bits). In one embodiment, to support legacy SSE instructions that use a SIMD prefix (66H, F2H, F3H) in both the legacy format and in the EVEX prefix format, these legacy SIMD prefixes are encoded into the SIMD prefix encoding field; and at runtime are expanded into the legacy SIMD prefix prior to being provided to the decoder's PLA (so the PLA can execute both the legacy and EVEX format of these legacy instructions without modification). Although newer instructions could use the EVEX prefix encoding field's content directly as an opcode extension, certain embodiments expand in a similar fashion for consistency but allow for different meanings to be specified by these legacy SIMD prefixes. An alternative embodiment may redesign the PLA to support the 2 bit SIMD prefix encodings, and thus not require the expansion.

Alpha field 152 (EVEX byte 3, bit [7] - EH; also known as EVEX.EH, EVEX.rs, EVEX.RL, EVEX.write mask control, and EVEX.N; also illustrated with $\alpha$) - as previously described, this field is context specific.

Beta field 154 (EVEX byte 3, bits [6:4]-SSS, also known as EVEX.$s_{2-0}$, EVEX.$r_{2-0}$, EVEX.rr1, EVEX.LL0, EVEX.LLB; also illustrated with $\beta\beta\beta$) - as previously described, this field is context specific.

REX' field 110 - this is the remainder of the REX' field and is the EVEX.V' bit field (EVEX Byte 3, bit [3] - V') that may be used to encode either the upper 16 or lower 16 of the extended 32 register set. This bit is stored in bit inverted format. A value of 1 is used to encode the lower 16 registers. In other words, V'VVVV is formed by combining EVEX.V', EVEX.vvvv.

Write mask field 170 (EVEX byte 3, bits [2:0]-kkk) - its content specifies the index of a register in the write mask registers as previously described. In one embodiment of the invention, the specific value EVEX.kkk=000 has a special behavior implying no write mask is used for the particular instruction (this may be implemented in a variety of ways including the use of a write mask hardwired to all ones or hardware that bypasses the masking hardware).

Real Opcode Field 230 (Byte 4) is also known as the opcode byte. Part of the opcode is specified in this field.

MOD R/M Field 240 (Byte 5) includes MOD field 242, Reg field 244, and R/M field 246. As previously described, the MOD field's 242 content distinguishes between memory access and non-memory access operations. The role of Reg field 244 can be summarized to two situations: encoding either the destination register operand or a source register operand, or be treated as an opcode extension and not used to encode any instruction operand. The role of R/M field 246 may include the following: encoding the instruction operand that references a memory address, or encoding either the destination register operand or a source register operand.

Scale, Index, Base (SIB) Byte (Byte 6) - As previously described, the scale field's 150 content is used for memory address generation. SIB.xxx 254 and SIB.bbb 256 - the contents of these fields have been previously referred to with regard to the register indexes Xxxx and Bbbb.

Displacement field 162A (Bytes 7-10) - when MOD field 242 contains 10, bytes 7-10 are the displacement field 162A, and it works the same as the legacy 32-bit displacement (disp32) and works at byte granularity.

Displacement factor field 162B (Byte 7) - when MOD field 242 contains 01, byte 7 is the displacement factor field 162B. The location of this field is that same as that of the legacy x86 instruction set 8-bit displacement (disp8), which works at byte granularity. Since disp8 is sign extended, it can only address between -128 and 127 bytes offsets; in terms of 64 byte cache lines, disp8 uses 8 bits that can be set to only four really useful values -128, -64, 0, and 64; since a greater range is often needed, disp32 is used; however, disp32 requires 4 bytes. In contrast to disp8 and disp32, the displacement factor field 162B is a reinterpretation of disp8; when using displacement factor field 162B, the actual displacement is determined by the content of the displacement factor field multiplied by the size of the memory operand access (N). This type of displacement is referred to as disp8*N. This reduces the average instruction length (a single byte of used for the displacement but with a much greater range). Such compressed displacement is based on the assumption that the effective displacement is multiple of the granularity of the memory access, and hence, the redundant low-order bits of the address offset do not need to be encoded. In other words, the displacement factor field 162B substitutes the legacy x86 instruction set 8-bit displacement. Thus, the displacement factor field 162B is encoded the same way as an x86 instruction set 8-bit displacement (so no changes in the ModRM/SIB encoding rules) with the only exception that disp8 is overloaded to disp8*N. In other words, there are no changes in the encoding rules or encoding lengths but only in the interpretation of the displacement value by hardware (which needs to scale the displacement by the size of the memory operand to obtain a byte-wise address offset).

Immediate field 172 operates as previously described.

## Full Opcode Field

**Figure 2B** is a block diagram illustrating the fields of the specific vector friendly instruction format 200 that make up the full opcode field 174 according to one embodiment of the invention. Specifically, the full opcode field 174 includes the format field 140, the base operation field 142, and the data element width (W) field 164. The base operation field 142 includes the prefix encoding field 225, the opcode map field 215, and the real opcode field 230.

## Register Index Field

**Figure 2C** is a block diagram illustrating the fields of the specific vector friendly instruction format 200 that make up the register index field 144 according to one embodiment of the invention. Specifically, the register index field 144 includes the REX field 205, the REX' field 210, the MODR/M.reg field 244, the MODR/M.r/m field 246, the VVVV field 220, xxx field 254, and the bbb field 256.

## Augmentation Operation Field

**Figure 2D** is a block diagram illustrating the fields of the specific vector friendly instruction format 200 that make up the augmentation operation field 150 according to one embodiment of the invention. When the class (U) field 168 contains 0, it signifies EVEX.U0 (class A 168A); when it contains 1, it signifies EVEX.U1 (class B 168B). When U=0 and the MOD field 242 contains 11 (signifying a no memory access operation), the alpha field 152 (EVEX byte 3, bit [7] - EH) is interpreted as the rs field 152A. When the rs field 152A contains a 1 (round 152A.1), the beta field 154 (EVEX byte 3, bits [6:4]- SSS) is interpreted as the round control field 154A. The round control field 154A includes a one bit SAE field 156 and a two bit round operation field 158. When the rs field 152A contains a 0 (data transform 152A.2), the beta field 154 (EVEX byte 3, bits [6:4]- SSS) is interpreted as a three bit data transform field 154B. When U=0 and the MOD field 242 contains 00, 01, or 10 (signifying a memory access operation), the alpha field 152 (EVEX byte 3, bit [7] - EH) is interpreted as the eviction hint (EH) field 152B and the beta field 154 (EVEX byte 3, bits [6:4]- SSS) is interpreted as a three bit data manipulation field 154C.

When U=1, the alpha field 152 (EVEX byte 3, bit [7] - EH) is interpreted as the write mask control (Z) field 152C. When U=1 and the MOD field 242 contains 11 (signifying a no memory access operation), part of the beta field 154 (EVEX byte 3, bit [4]- $S_0$) is interpreted as the RL field 157A; when it contains a 1 (round 157A.1) the rest of the beta field 154 (EVEX byte 3, bit [6-5]- $S_{2-1}$) is interpreted as the round operation field 159A, while when the RL field 157A contains a 0 (VSIZE 157.A2) the rest of the beta field 154 (EVEX byte 3, bit [6-5]- $S_{2-1}$) is interpreted as the vector length field 159B (EVEX byte 3, bit [6-5]- $L_{1-0}$). When U=1 and the MOD field 242 contains 00, 01, or 10 (signifying a memory access operation), the beta field 154 (EVEX byte 3, bits [6:4]-SSS) is interpreted as the vector length field 159B (EVEX byte 3, bit [6-5]- $L_{1-0}$) and the broadcast field 157B (EVEX byte 3, bit [4]- B).

## C. Exemplary Register Architecture

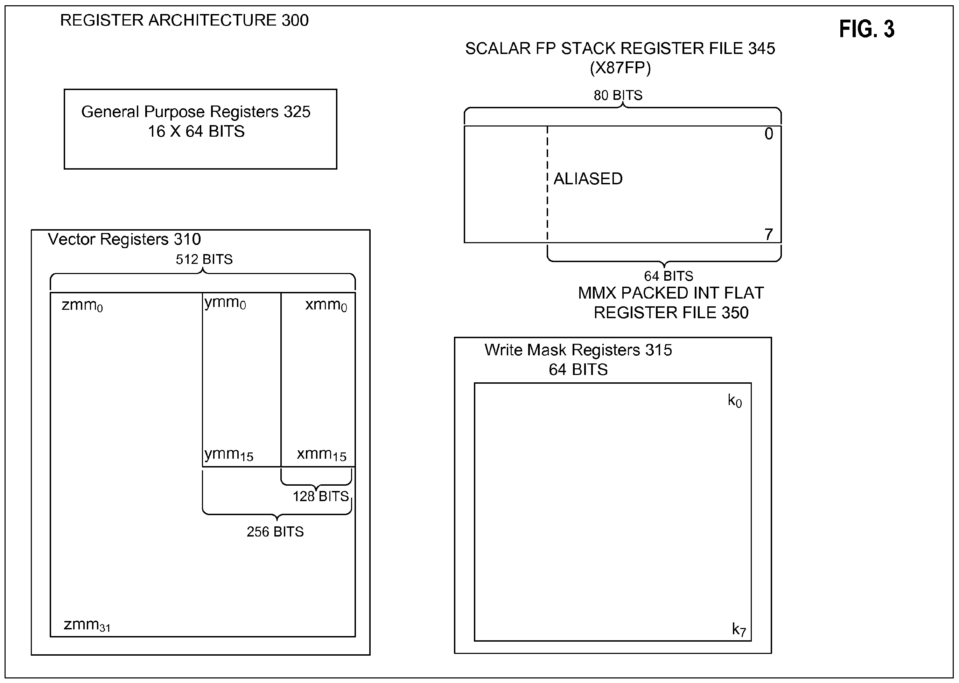

**Figure 3** is a block diagram of a register architecture 300 according to one embodiment of the invention. In the embodiment illustrated, there are 32 vector registers 310 that are 512 bits wide; these registers are referenced as zmm0 through zmm31. The lower order 256 bits of the lower 16 zmm registers are overlaid on registers ymm0-16. The lower order 128 bits of the lower 16 zmm registers (the lower order 128 bits of the ymm registers) are overlaid on registers xmm0-15. The specific vector friendly instruction format 200 operates on these overlaid register file as illustrated in the below tables.

| Adjustable Vector Length | Class | Operations | Registers |
|---|---|---|---|
| Instruction Templates that do not include the vector length field 159B | A (Figure 1A; U=0) | 110, 115, 125, 130 | zmm registers (the vector length is 64 byte) |
| | B (Figure 1B; U=1) | 112 | zmm registers (the vector length is 64 byte) |
| Instruction templates that do include the vector length field 159B | B (Figure 1B; U=1) | 117, 127 | zmm, ymm, or xmm registers (the vector length is 64 byte, 32 byte, or 16 byte) depending on the vector length field 159B |

In other words, the vector length field 159B selects between a maximum length and one or more other shorter lengths, where each such shorter length is half the length of the preceding length; and instructions templates without the vector length field 159B operate on the maximum vector length. Further, in one embodiment, the class B instruction templates of the specific vector friendly instruction format 200 operate on packed or scalar single/double-precision floating point data and packed or scalar integer data. Scalar operations are operations performed on the lowest order data element position in an zmm/ymm/xmm register; the higher order data element positions are either left the same as they were prior to the instruction or zeroed depending on the embodiment.

Write mask registers 315 - in the embodiment illustrated, there are 8 write mask registers (k0 through k7), each 64 bits in size. In an alternate embodiment, the write mask registers 315 are 16 bits in size. As previously described, in one embodiment of the invention, the vector mask register k0 cannot be used as a write mask; when the encoding that would normally indicate k0 is used for a write mask, it selects a hardwired write mask of 0xFFFF, effectively disabling write masking for that instruction.

General-purpose registers 325 - in the embodiment illustrated, there are sixteen 64-bit general-purpose registers that are used along with the existing x86 addressing modes to address memory operands. These registers are referenced by the names RAX, RBX, RCX, RDX, RBP, RSI, RDI, RSP, and R8 through R15.

Scalar floating point stack register file (x87 stack) 345, on which is aliased the MMX packed integer flat register file 350 - in the embodiment illustrated, the x87 stack is an eight-element stack used to perform scalar floating-point operations on 32/64/80-bit floating point data using the x87 instruction set extension; while the MMX registers are used to perform operations on 64-bit packed integer data, as well as to hold operands for some operations performed between the MMX and XMM registers.

Alternative embodiments of the invention may use wider or narrower registers. Additionally, alternative embodiments of the invention may use more, less, or different register files and registers.

## D. Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

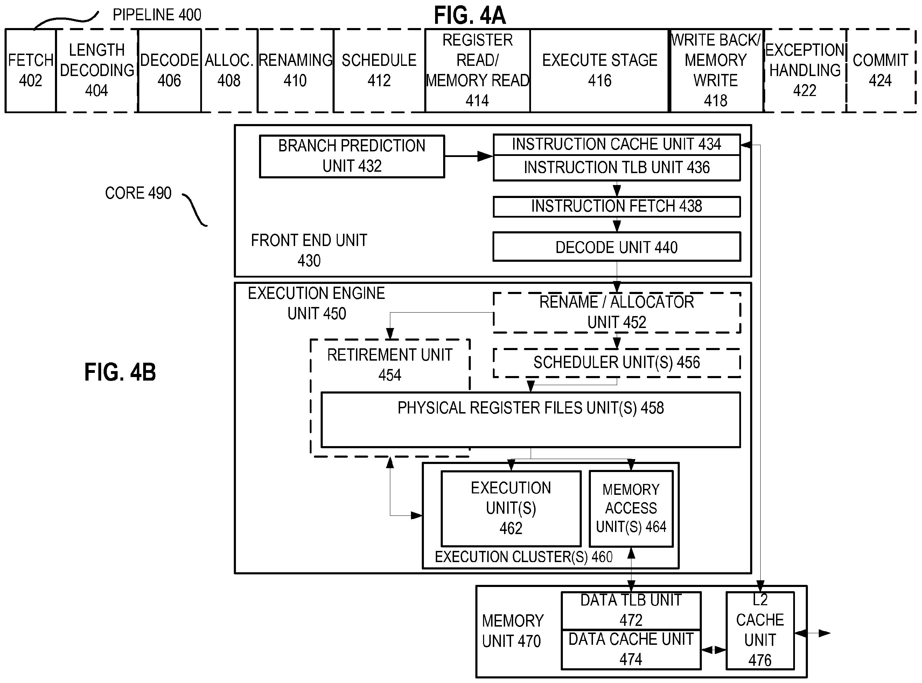

**Figure 4A** is a block diagram illustrating both an exemplary in-order pipeline and an exemplary register renaming, out-of-order issue/execution pipeline according to embodiments of the invention. Figure 4B is a block diagram illustrating both an exemplary embodiment of an in-order architecture core and an exemplary register renaming, out-of-order issue/execution architecture core to be included in a processor according to embodiments of the invention. The solid lined boxes in **Figures 4A-B** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **Figure 4A,** a processor pipeline 400 includes a fetch stage 402, a length decode stage 404, a decode stage 406, an allocation stage 408, a renaming stage 410, a scheduling (also known as a dispatch or issue) stage 412, a register read/memory read stage 414, an execute stage 416, a write back/memory write stage 418, an exception handling stage 422, and a commit stage 424.

**Figure 4B** shows processor core 490 including a front end unit 430 coupled to an execution engine unit 450, and both are coupled to a memory unit 470. The core 490 may be a reduced instruction set computing (RISC) core, a complex instruction set computing (CISC) core, a very long instruction word (VLIW) core, or a hybrid or alternative core type. As yet another option, the core 490 may be a special-purpose core, such as, for example, a network or communication core, compression engine, coprocessor core, general purpose computing graphics processing unit (GPGPU) core, graphics core, or the like.

The front end unit 430 includes a branch prediction unit 432 coupled to an instruction cache unit 434, which is coupled to an instruction translation lookaside buffer (TLB) 436, which is coupled to an instruction fetch unit 438, which is coupled to a decode unit 440. The decode unit 440 (or decoder) may decode instructions, and generate as an output one or more micro-operations, micro-code entry points, microinstructions, other instructions, or other control signals, which are decoded from, or which otherwise reflect, or are derived from, the original instructions. The decode unit 440 may be implemented using various different mechanisms. Examples of suitable mechanisms include, but are not limited to, look-up tables, hardware implementations, programmable logic arrays (PLAs), microcode read only memories (ROMs), etc. In one embodiment, the core 490 includes a microcode ROM or other medium that stores microcode for certain macroinstructions (e.g., in decode unit 440 or otherwise within the front end unit 430). The decode unit 440 is coupled to a rename/allocator unit 452 in the execution engine unit 450.

The execution engine unit 450 includes the rename/allocator unit 452 coupled to a retirement unit 454 and a set of one or more scheduler unit(s) 456. The scheduler unit(s) 456 represents any number of different schedulers, including reservations stations, central instruction window, etc. The scheduler unit(s) 456 is coupled to the physical register file(s) unit(s) 458. Each of the physical register file(s) units 458 represents one or more physical register files, different ones of which store one or more different data types, such as scalar integer, scalar floating point, packed integer, packed floating point, vector integer, vector floating point,, status (e.g., an instruction pointer that is the address of the next instruction to be executed), etc. In one embodiment, the physical register file(s) unit 458 comprises a vector registers unit, a write mask registers unit, and a scalar registers unit. These register units may provide architectural vector registers, vector mask registers, and general purpose registers. The physical register file(s) unit(s) 458 is overlapped by the retirement unit 454 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 454 and the physical register file(s) unit(s) 458 are coupled to the execution cluster(s) 460. The execution cluster(s) 460 includes a set of one or more execution units 462 and a set of one or more memory access units 464. The execution units 462 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 456, physical register file(s) unit(s) 458, and execution cluster(s) 460 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 464). It should also be understood that where separate pipelines are used, one or more of these pipelines may be out-of-order issue/execution and the rest in-order.

The set of memory access units 464 is coupled to the memory unit 470, which includes a data TLB unit 472 coupled to a data cache unit 474 coupled to a level 2 (L2) cache unit 476. In one exemplary embodiment, the memory access units 464 may include a load unit, a store address unit, and a store data unit, each of which is coupled to the data TLB unit 472 in the memory unit 470. The instruction cache unit 434 is further coupled to a level 2 (L2) cache unit 476 in the memory unit 470. The L2 cache unit 476 is coupled to one or more other levels of cache and eventually to a main memory.

By way of example, the exemplary register renaming, out-of-order issue/execution core architecture may implement the pipeline 400 as follows: 1) the instruction fetch 438 performs the fetch and length decoding stages 402 and 404; 2) the decode unit 440 performs the decode stage 406; 3) the rename/allocator unit 452 performs the allocation stage 408 and renaming stage 410; 4) the scheduler unit(s) 456 performs the schedule stage 412; 5) the physical register file(s) unit(s) 458 and the memory unit 470 perform the register read/memory read stage 414; the execution cluster 460 perform the execute stage 416; 6) the memory unit 470 and the physical register file(s) unit(s) 458 perform the write back/memory write stage 418; 7) various units may be involved in the exception handling stage 422; and 8) the retirement unit 454 and the physical register file(s) unit(s) 458 perform the commit stage 424.

The core 490 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 490 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyperthreading technology).

While register renaming is described in the context of out-of-order execution, it should be understood that register renaming may be used in an in-order architecture. While the illustrated embodiment of the processor also includes separate instruction and data cache units 434/474 and a shared L2 cache unit 476, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

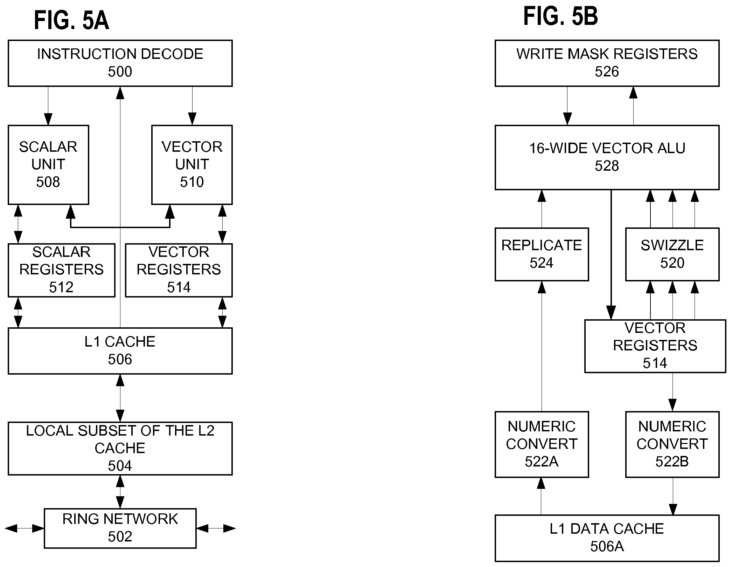

**Figures 5A-B** illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

**Figure 5A** is a block diagram of a single processor core, along with its connection to the on-die interconnect network 502 and with its local subset of the Level 2 (L2) cache 504, according to embodiments of the invention. In one embodiment, an instruction decoder 500 supports the x86 instruction set with a packed data instruction set extension. An L1 cache 506 allows low-latency accesses to cache memory into the scalar and vector units. While in one embodiment (to simplify the design), a scalar unit 508 and a vector unit 510 use separate register sets (respectively, scalar registers 512 and vector registers 514) and data transferred between them is written to memory and then read back in from a level 1 (L1) cache 506, alternative embodiments of the invention may use a different approach (e.g., use a single register set or include a communication path that allow data to be transferred between the two register files without being written and read back).

The local subset of the L2 cache 504 is part of a global L2 cache that is divided into separate local subsets, one per processor core. Each processor core has a direct access path to its own local subset of the L2 cache 504. Data read by a processor core is stored in its L2 cache subset 504 and can be accessed quickly, in parallel with other processor cores accessing their own local L2 cache subsets. Data written by a processor core is stored in its own L2 cache subset 504 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

**Figure 5B** is an expanded view of part of the processor core in **Figure 5A** according to embodiments of the invention. **Figure 5B** includes an L1 data cache 506A part of the L1 cache 504, as well as more detail regarding the vector unit 510 and the vector registers 514. Specifically, the vector unit 510 is a 16-wide vector processing unit (VPU) (see the 16-wide ALU 528), which executes one or more of integer, single-precision float, and double-precision float instructions. The VPU supports swizzling the register inputs with swizzle unit 520, numeric conversion with numeric convert units 522A-B, and replication with replication unit 524 on the memory input. Write mask registers 526 allow predicating resulting vector writes.

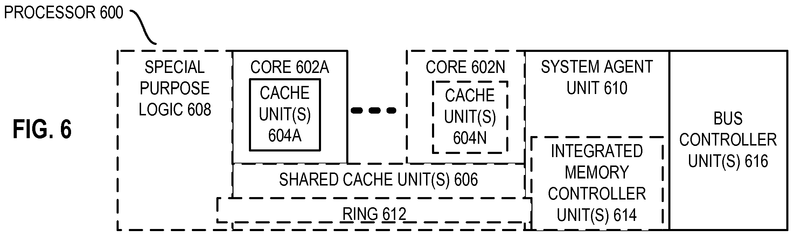

**Figure 6** is a block diagram of a processor 600 that may have more than one core, may have an integrated memory controller, and may have integrated graphics according to embodiments of the invention. The solid lined boxes in **Figure 6** illustrate a processor 600 with a single core 602A, a system agent 610, a set of one or more bus controller units 616, while the optional addition of the dashed lined boxes illustrates an alternative processor 600 with multiple cores 602A-N, a set of one or more integrated memory controller unit(s) 614 in the system agent unit 610, and special purpose logic 608.

Thus, different implementations of the processor 600 may include: 1) a CPU with the special purpose logic 608 being integrated graphics and/or scientific (throughput) logic (which may include one or more cores), and the cores 602A-N being one or more general purpose cores (e.g., general purpose in-order cores, general purpose out-of-order cores, a combination of the two); 2) a coprocessor with the cores 602A-N being a large number of special purpose cores intended primarily for graphics and/or scientific (throughput); and 3) a coprocessor with the cores 602A-N being a large number of general purpose in-order cores. Thus, the processor 600 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 600 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache units 606, and external memory (not shown) coupled to the set of integrated memory controller units 614. The set of shared cache units 606 may include one or more mid-level caches, such as level 2 (L2), level 3 (L3), level 4 (L4), or other levels of cache, a last level cache (LLC), and/or combinations thereof. While in one embodiment a ring based interconnect unit 612 interconnects the integrated graphics logic 608, the set of shared cache units 606, and the system agent unit 610/integrated memory controller unit(s) 614, alternative embodiments may use any number of well-known techniques for interconnecting such units. In one embodiment, coherency is maintained between one or more cache units 606 and cores 602-A-N.

In some embodiments, one or more of the cores 602A-N are capable of multi-threading. The system agent 610 includes those components coordinating and operating cores 602A-N. The system agent unit 610 may include for example a power control unit (PCU) and a display unit. The PCU may be or include logic and components needed for regulating the power state of the cores 602A-N and the integrated graphics logic 608. The display unit is for driving one or more externally connected displays.

The cores 602A-N may be homogenous or heterogeneous in terms of architecture instruction set; that is, two or more of the cores 602A-N may be capable of execution the same instruction set, while others may be capable of executing only a subset of that instruction set or a different instruction set.

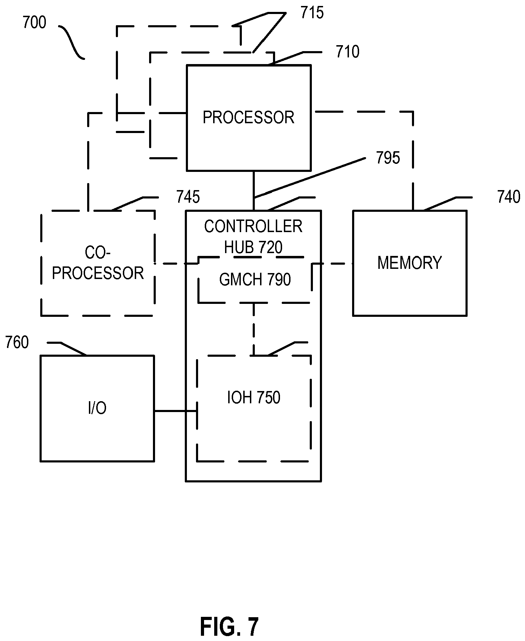

**Figures 7-10** are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to **Figure 7,** shown is a block diagram of a system 700 in accordance with one embodiment of the present invention. The system 700 may include one or more processors 710, 715, which are coupled to a controller hub 720. In one embodiment the controller hub 720 includes a graphics memory controller hub (GMCH) 790 and an Input/Output Hub (IOH) 750 (which may be on separate chips); the GMCH 790 includes memory and graphics controllers to which are coupled memory 740 and a coprocessor 745; the IOH 750 is couples input/output (I/O) devices 760 to the GMCH 790. Alternatively, one or both of the memory and graphics controllers are integrated within the processor (as described herein), the memory 740 and the coprocessor 745 are coupled directly to the processor 710, and the controller hub 720 in a single chip with the IOH 750.

The optional nature of additional processors 715 is denoted in **Figure** 7 with broken lines. Each processor 710, 715 may include one or more of the processing cores described herein and may be some version of the processor 600.

The memory 740 may be, for example, dynamic random access memory (DRAM), phase change memory (PCM), or a combination of the two. For at least one embodiment, the controller hub 720 communicates with the processor(s) 710, 715 via a multi-drop bus, such as a frontside bus (FSB), point-to-point interface such as QuickPath Interconnect (QPI), or similar connection 795.

In one embodiment, the coprocessor 745 is a special-purpose processor, such as, for example, a high-throughput MIC processor, a network or communication processor, compression engine, graphics processor, GPGPU, embedded processor, or the like. In one embodiment, controller hub 720 may include an integrated graphics accelerator.

There can be a variety of differences between the physical resources 710, 715 in terms of a spectrum of metrics of merit including architectural, microarchitectural, thermal, power consumption characteristics, and the like.

In one embodiment, the processor 710 executes instructions that control data processing operations of a general type. Embedded within the instructions may be coprocessor instructions. The processor 710 recognizes these coprocessor instructions as being of a type that should be executed by the attached coprocessor 745. Accordingly, the processor 710 issues these coprocessor instructions (or control signals representing coprocessor instructions) on a coprocessor bus or other interconnect, to coprocessor 745. Coprocessor(s) 745 accept and execute the received coprocessor instructions.

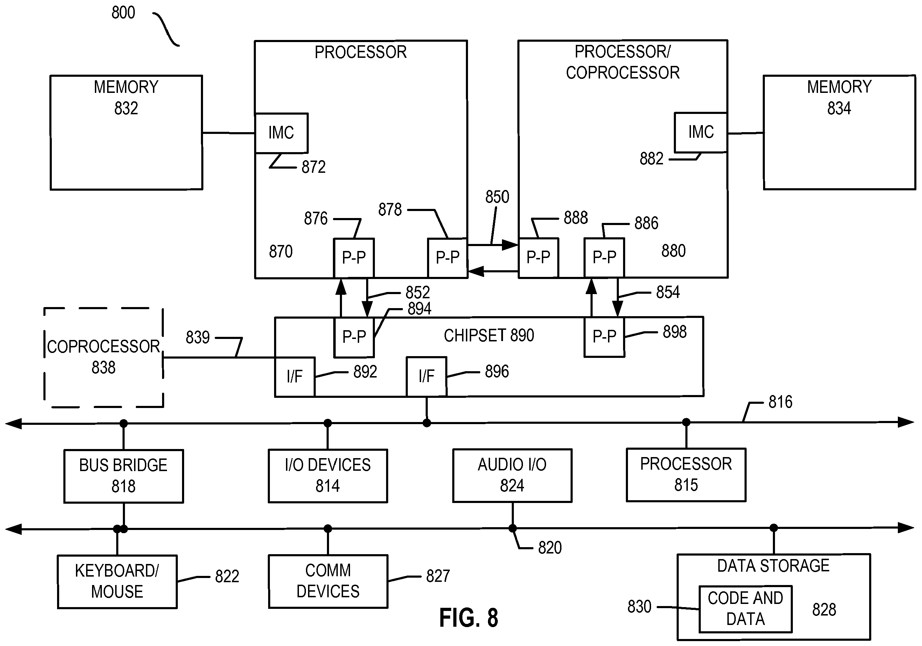

Referring now to **Figure 8,** shown is a block diagram of a first more specific exemplary system 800 in accordance with an embodiment of the present invention. As shown in **Figure 8,** multiprocessor system 800 is a point-to-point interconnect system, and includes a first processor 870 and a second processor 880 coupled via a point-to-point interconnect 850. Each of processors 870 and 880 may be some version of the processor 600. In one embodiment of the invention, processors 870 and 880 are respectively processors 710 and 715, while coprocessor 838 is coprocessor 745. In another embodiment, processors 870 and 880 are respectively processor 710 coprocessor 745.

Processors 870 and 880 are shown including integrated memory controller (IMC) units 872 and 882, respectively. Processor 870 also includes as part of its bus controller units point-to-point (P-P) interfaces 876 and 878; similarly, second processor 880 includes P-P interfaces 886 and 888. Processors 870, 880 may exchange information via a point-to-point (P-P) interface 850 using P-P interface circuits 878, 888. As shown in **Figure 8,** IMCs 872 and 882 couple the processors to respective memories, namely a memory 832 and a memory 834, which may be portions of main memory locally attached to the respective processors.

Processors 870, 880 may each exchange information with a chipset 890 via individual P-P interfaces 852, 854 using point to point interface circuits 876, 894, 886, 898. Chipset 890 may optionally exchange information with the coprocessor 838 via a high-performance interface 839. In one embodiment, the coprocessor 838 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 890 may be coupled to a first bus 816 via an interface 896. In one embodiment, first bus 816 may be a Peripheral Component Interconnect (PCI) bus, or a bus such as a PCI Express bus or another third generation I/O interconnect bus, although the scope of the present invention is not so limited.

As shown in **Figure 8,** various I/O devices 814 may be coupled to first bus 816, along with a bus bridge 818 which couples first bus 816 to a second bus 820. In one embodiment, one or more additional processor(s) 815, such as coprocessors, high-throughput MIC processors, GPGPU's, accelerators (such as, e.g., graphics accelerators or digital signal processing (DSP) units), field programmable gate arrays, or any other processor, are coupled to first bus 816. In one embodiment, second bus 820 may be a low pin count (LPC) bus. Various devices may be coupled to a second bus 820 including, for example, a keyboard and/or mouse 822, communication devices 827 and a storage unit 828 such as a disk drive or other mass storage device which may include instructions/code and data 830, in one embodiment. Further, an audio I/O 824 may be coupled to the second bus 820. Note that other architectures are possible. For example, instead of the point-to-point architecture of **Figure 8,** a system may implement a multi-drop bus or other such architecture.

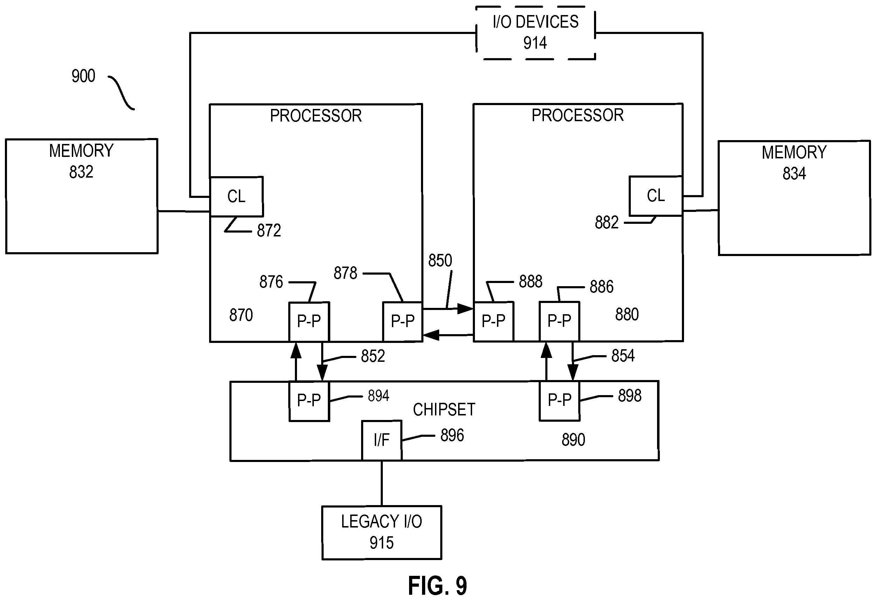

Referring now to **Figure 9,** shown is a block diagram of a second more specific exemplary system 900 in accordance with an embodiment of the present invention. Like elements in **Figures 8 and 9** bear like reference numerals, and certain aspects of **Figure 8** have been omitted from **Figure 9** in order to avoid obscuring other aspects of **Figure 9.**

**Figure 9** illustrates that the processors 870, 880 may include integrated memory and I/O control logic ("CL") 872 and 882, respectively. Thus, the CL 872, 882 include integrated memory controller units and include I/O control logic. **Figure 9** illustrates that not only are the memories 832, 834 coupled to the CL 872, 882, but also that I/O devices 914 are also coupled to the control logic 872, 882. Legacy I/O devices 915 are coupled to the chipset 890.

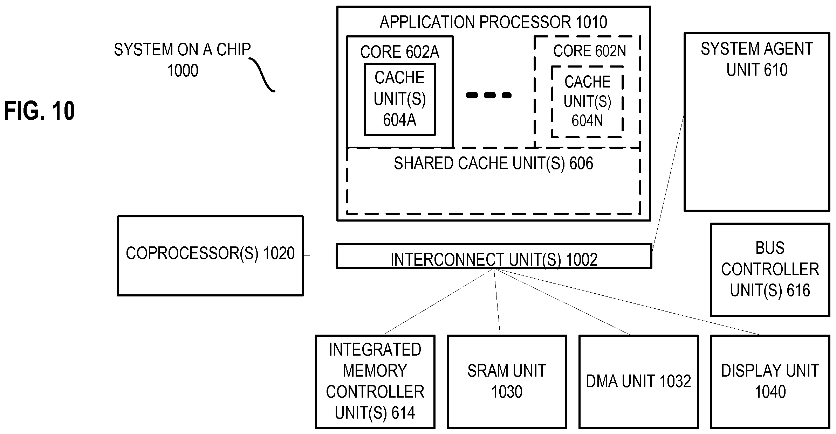

Referring now to **Figure 10,** shown is a block diagram of a SoC 1000 in accordance with an embodiment of the present invention. Similar elements in **Figure 6** bear like reference numerals. Also, dashed lined boxes are optional features on more advanced SoCs. In **Figure 10,** an interconnect unit(s) 1002 is coupled to: an application processor 1010 which includes a set of one or more cores 202A-N and shared cache unit(s) 606; a system agent unit 610; a bus controller unit(s) 616; an integrated memory controller unit(s) 614; a set or one or more coprocessors 1020 which may include integrated graphics logic, an image processor, an audio processor, and a video processor; an static random access memory (SRAM) unit 1030; a direct memory access (DMA) unit 1032; and a display unit 1040 for coupling to one or more external displays. In one embodiment, the coprocessor(s) 1020 include a special-purpose processor, such as, for example, a network or communication processor, compression engine, GPGPU, a high-throughput MIC processor, embedded processor, or the like.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

Program code, such as code 830 illustrated in **Figure 8,** may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

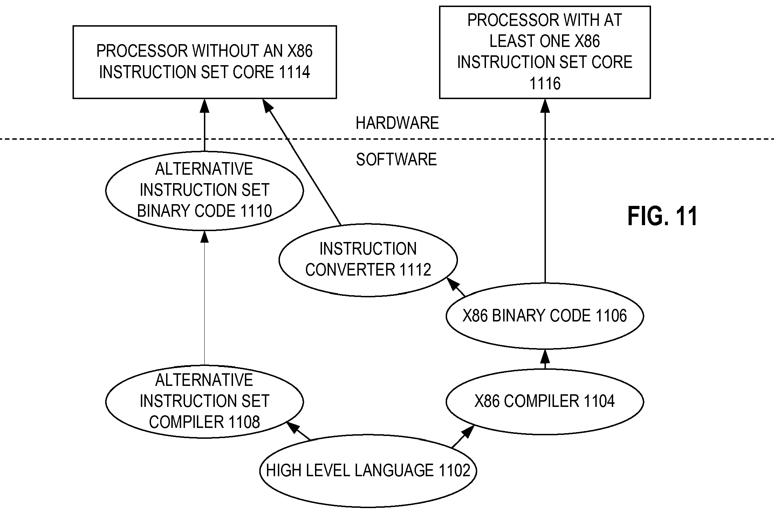

**Figure 11** is a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. **Figure 11** shows a program in a high level language 1102 may be compiled using an x86 compiler 1104 to generate x86 binary code 1106 that may be natively executed by a processor with at least one x86 instruction set core 1116. The processor with at least one x86 instruction set core 1116 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 1104 represents a compiler that is operable to generate x86 binary code 1106 (e.g., object code) that can, with or without additional linkage processing, be executed on the processor with at least one x86 instruction set core 1116. Similarly, **Figure 11** shows the program in the high level language 1102 may be compiled using an alternative instruction set compiler 1108 to generate alternative instruction set binary code 1110 that may be natively executed by a processor without at least one x86 instruction set core 1114 (e.g., a processor with cores that execute the MIPS instruction set of MIPS Technologies of Sunnyvale, CA and/or that execute the ARM instruction set of ARM Holdings of Sunnyvale, CA). The instruction converter 1112 is used to convert the x86 binary code 1106 into code that may be natively executed by the processor without an x86 instruction set core 1114. This converted code is not likely to be the same as the alternative instruction set binary code 1110 because an instruction converter capable of this is difficult to make; however, the converted code will accomplish the general operation and be made up of instructions from the alternative instruction set. Thus, the instruction converter 1112 represents software, firmware, hardware, or a combination thereof that, through emulation, simulation or any other process, allows a processor or other electronic device that does not have an x86 instruction set processor or core to execute the x86 binary code 1106.

METHOD AND APPARATUS FOR PERFORMING

BIG INTEGER ARITHMETIC OPERATIONS

Big-integer arithmetic (multiplication in particular) is used extensively for public key cryptography in protocols such as transport layer security (TLS). A sample list of algorithms that rely on big-integer arithmetic includes, but is not limited to, Elliptic Curve (EC) Cryptography where it is used for Elliptic curve Diffie-Hellman (ECDH) key exchanges and Elliptic Curve Digital Signature Algorithm (ECDSA) signature scheme; and modular arithmetic based algorithms such as Revest-Shamir-Adleman (RSA), Diffie-Hellman (DH), and Digital Secure Algorithm (DSA).

The use of elliptic curve cryptography (ECC) is now proliferating due to the high efficiency of these algorithms for implementing a Perfect Forward Secrecy TSL session. Currently, most of the EC-based signatures and key exchange algorithms are performed over a 256 (or 255) bit prime field. These EC-based techniques can benefit greatly from a fast 256-bit multiplication routine such as described below.

One embodiment of the invention includes new instructions that perform a multiplication of two 256 bit integers, producing a 512 bit result and also perform a square of 256 bit integer, producing a 512 bit result. In addition, one embodiment of the invention includes an implementation that reuses existing the 52 x 52 -> 104 bit multipliers used in current architecture designs, with limited additional hardware. For example, such multipliers are currently found in the floating-point multiply-add (FMA) units in existing x86 architectures, which are currently utilized by vpmadd52luq and vpmadd52huq instructions. Currently, CNL/ICL server processors include the FMA hardware (ports 1/5 executing at 4 cycles, with 1 cycle throughput). Effectively, 16 multipliers and adders are available to be used, although they are not exposed by the architecture.

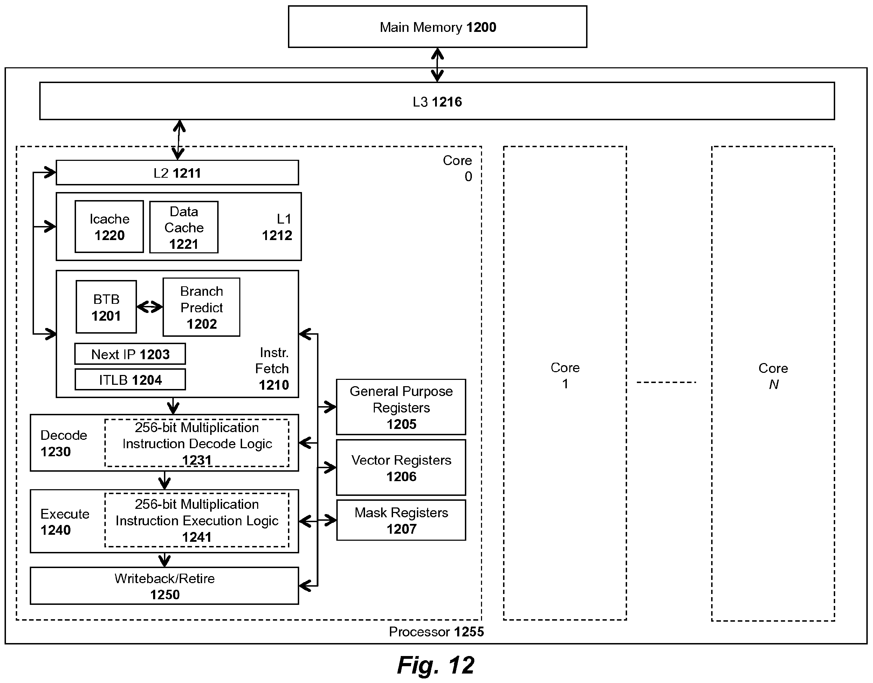

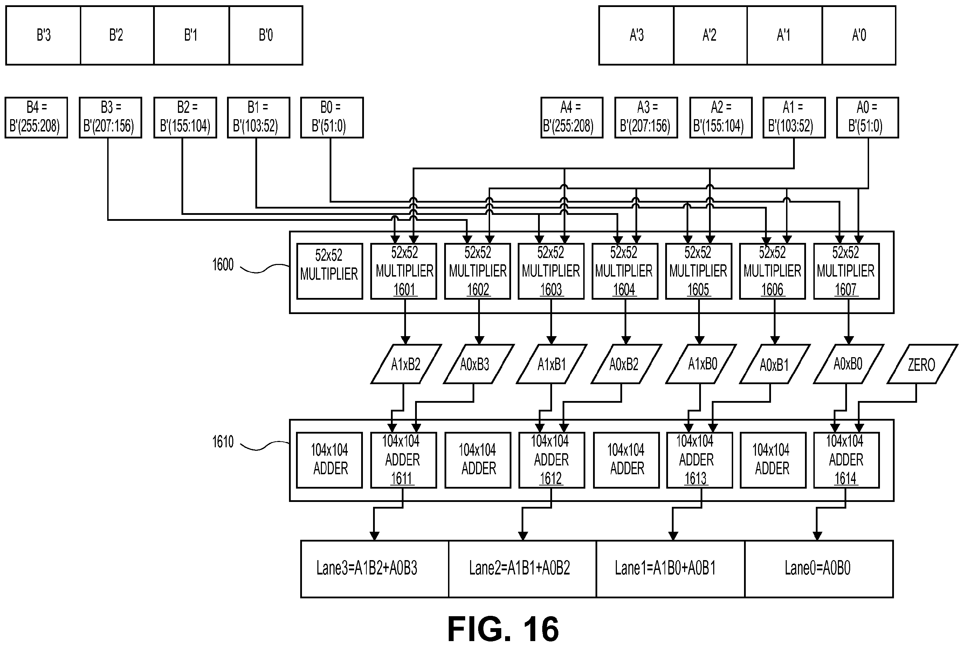

As illustrated in **Figure 12,** an exemplary processor 1255 with a plurality of cores 0-N on which embodiments of the invention may be implemented. In particular, each core includes a decode stage 1230 with 256-bit multiply instruction decode logic 1231 for decoding a 256-bit multiply instruction into a plurality of micro-operations to be executed by execution logic 1240. In particular, the exemplary processor 1255 also includes 256-bit multiply instruction execution logic 1241 for executing the 256-bit multiply operation in accordance with the embodiments of the invention described below (e.g., using multipliers and adders described below with respect to **Figure 16**).

In addition, each core 0-N includes a set of general purpose registers (GPRs) 1205, a set of vector registers 1206, and a set of mask registers 1207. In one embodiment, multiple vector data elements are packed into each vector register 1206 which may have a 512 bit width for storing two 256 bit values, four 128 bit values, eight 64 bit values, sixteen 32 bit values, etc. However, the underlying principles of the invention are not limited to any particular size/type of vector data. In one embodiment, the mask registers 1207 include eight 64-bit operand mask registers used for performing bit masking operations on the values stored in the vector registers 1206 (e.g., implemented as mask registers k0-k7 described above). However, the underlying principles of the invention are not limited to any particular mask register size/type.

The details of a single processor core ("Core 0") are illustrated in **Figure 12** for simplicity. It will be understood, however, that each core shown in **Figure 12** may have the same set of logic as Core 0. For example, each core may include a dedicated Level 1 (L1) cache 1212 and Level 2 (L2) cache 1211 for caching instructions and data according to a specified cache management policy. The L1 cache 1212 includes a separate instruction cache 1220 for storing instructions and a separate data cache 1221 for storing data. The instructions and data stored within the various processor caches are managed at the granularity of cache lines which may be a fixed size (e.g., 64, 128, 512 Bytes in length). Each core of this exemplary embodiment has an instruction fetch unit 1210 for fetching instructions from main memory 1200 and/or a shared Level 3 (L3) cache 1216; a decode unit 1220 for decoding the instructions (e.g., decoding program instructions into micro-operatons or "uops"); an execution unit 1240 for executing the instructions; and a writeback unit 1250 for retiring the instructions and writing back the results.

The instruction fetch unit 1210 includes various well known components including a next instruction pointer 1203 for storing the address of the next instruction to be fetched from memory 1200 (or one of the caches); an instruction translation lookaside buffer (ITLB) 1204 for storing a map of recently used virtual-to-physical instruction addresses to improve the speed of address translation; a branch prediction unit 1202 for speculatively predicting instruction branch addresses; and branch target buffers (BTBs) 1201 for storing branch addresses and target addresses. Once fetched, instructions are then streamed to the remaining stages of the instruction pipeline including the decode unit 1230, the execution unit 1240, and the writeback unit 1250. The structure and function of each of these units is well understood by those of ordinary skill in the art and will not be described here in detail to avoid obscuring the pertinent aspects of the different embodiments of the invention.

In one embodiment, the following set of instructions are decoded and executed by the 256-bit multiply instruction decode logic 1231 and the 256-bit multiply instruction execution logic 1241:

**1. VMUL256TO512 ZMM1, YMM2, YMM3:** One embodiment of this instruction multiplies the 256bit numbers in source registers ymm2 and ymm3 and stores the 512 bit result in destination vector register zmm1 (all of which may be registers within the set of vector register 1206).
**2. VMUL256TO512 ZMM1, ZMM2, ZMM3:** One embodiment of this instruction multiplies the 256bit numbers in the lower half of the source vector registers zmm2 and zmm3 and stores the 512 bit result in destination vector register zmm1.
**3. VMUL256TO512 ZMM1, ZMM2, ZMM3, IMM8:** One embodiment of this instruction multiplies 256bit numbers from source vector registers zmm2 and zmm3 and stores the 512 bit result in destination vector register zmm1. The multiplication may be implemented according to the following definition using the immediate value:

$$imm8 = 0x00 \rightarrow res = zmm2[255:0]*zmm3[255:0],$$

$$imm8 = 0x10 \rightarrow res = zmm2[511:256] * zmm3[255:0],$$

$$imm8 = 0x01 \rightarrow res = zmm2[255:0]*zmm3[511:256],$$

$$imm8 = 0x11 \rightarrow res = zmm2[511:256]*zmm3[511:256].$$

In other words, for an immediate value of 0x00, the 256bit values are selected from bits 255:0 of source vector registers zmm2 and zmm3. For an immediate value of 0x10, the 256bit values are selected from bits 511:256 of source vector register zmm2 and from bits 255:0 of source vector register zmm3. For an immediate value of 0x01, the 256bit values are selected from bits 511:256 of source vector register zmm3 and from bits 255:0 of source vector register zmm2. Finally, for an immediate value of 0x11, the 256bit values are selected from bits 511:256 of source vector registers zmm2 and zmm3.

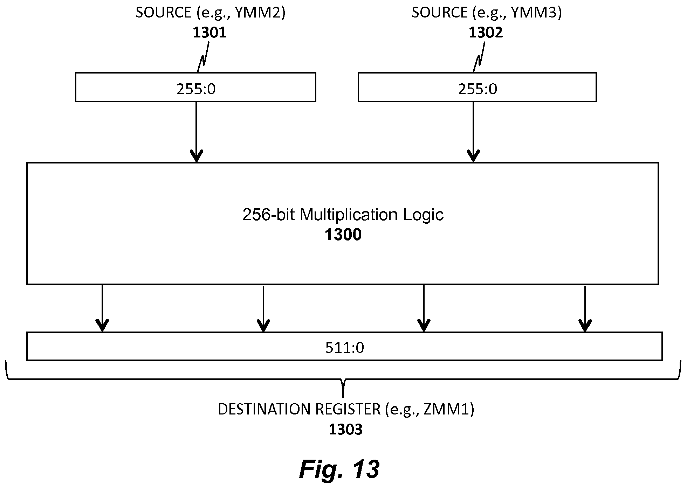

**Figure 13** illustrates one embodiment of the invention for implementing the first variation of the instruction in which 256-bit multiplication logic 1300 multiplies a first 256-bit integer stored in a first 256-bit source register 1301 (e.g., YMM2 in one embodiment) with a second 256-bit integer stored in a second 256-bit source register 1302 (e.g., YMM3 in one embodiment). The result of the multiplication is stored in a 512-bit destination register 1303 (e.g., ZMM1 in one embodiment).

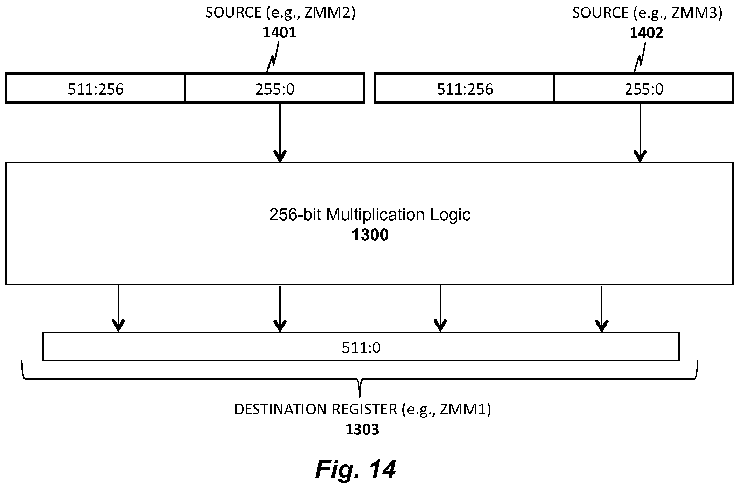

**Figure 14** illustrates one embodiment of the invention for implementation in the second variation of the instruction in which the 256-bit multiplication logic 1300 multiplies a first 256-bit integer stored in the lower half of a first 512-bit source vector register 1401 (e.g., encoded in bits 255:0 of ZMM2) with a second 256-bit integer stored in the lower half of a second 512-bit source vector register 1402 (e.g., encoded in bits 255:0 of ZMM3). The result of the multiplication is stored in a 512-bit destination register 1303 (e.g., ZMM1 in one embodiment).

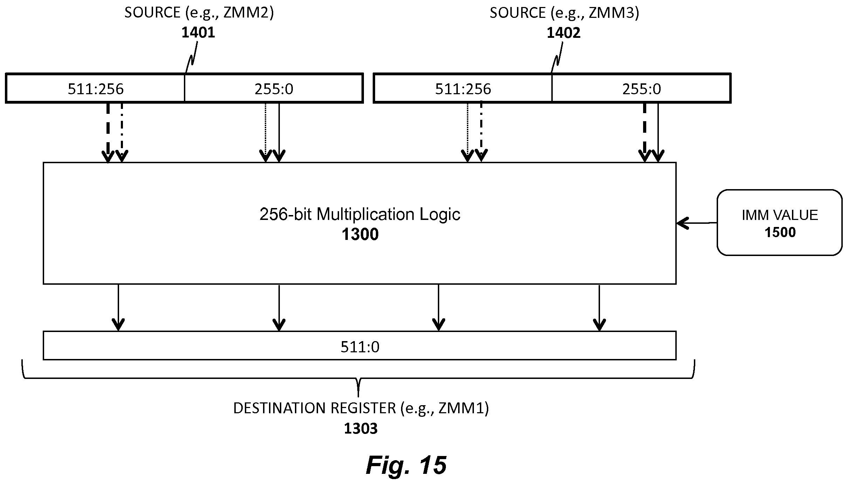

**Figure 15** illustrates another embodiment of the invention for implementing the third variation of the instruction. In this embodiment, the 256-bit source operands may be selected from either the lower or the upper half of the first source register 1401 and the second source register 1402. In one embodiment, the 256-bit multiplication logic selects the 256-bit source operand from either the lower or upper halves of the registers 1401-1402 in accordance with an immediate value 1500 (e.g., imm8) provided with the instruction. As mentioned above, if the immediate value is 0, then the source operands may be selected from the lower halves of both registers 1401-1402 (i.e., 255:0). If the immediate value is 1, then the first source operand is selected from the upper half of the first source register 1401 (511:256) and the second source operand is selected from the lower half of the second source register 1402 (255:0). If the immediate value is 2, then the first source operand is selected from the lower half of the first source register 1401 (255:0) and the second source operand is selected from the lower half of the second source register 1402 (511:256). Finally, if the immediate value is 3, then the source operands may be selected from the upper halves of both registers 1401-1402 (i.e., 511:256).

**Figure 16** illustrates one embodiment of the 256-bit multiplication logic 1300 which may be used to perform the above operations. The following discussion assumes that the multiplication operands are two 256 bit numbers, A' and B'. Instead of looking at the numbers as 4 digits in radix 264, they may be treated as 5 digits in radix 252. This allows multiplications to be performed in the floating point execution units 1600, 1610 which, in one embodiment, are capable of operating on 52 bit numbers (the mantissa of a double). In one embodiment, the same floating points units are implemented which are currently used to operate on integers for the vpmadd52luq and vpmadd52huq x86 instructions. Using this hardware, A' and B' may be determined as follows:

$$A` = A4*2^{52*4} + A3*2^{52*3} + A2*2^{52*2} + A1*2^{52*1} + A0$$

$$B` = B4*2^{52*4} + B3*2^{52*3} + B2*2^{52*2} + B1*2^{52*1} + B0$$

In this embodiment, A0, A1, A2, A3 as well as B0, B1, B2, B3 are exactly 52 bits long, while A4 and B4 are 48 bit integers. Multiplying the above values for A' and B' results in the following:

$$R = A4*B4*2^{52*8} + (A4*B3+A3*B4)*2^{52*7} + (A4*B2+A3*B3+A2*B4)*2^{52*6} +$$

$$(A4*B1+A3*B2+A2*B3+A1*B4)*2^{52*5} + (A4*B0+A3*B1+A2*B2+A1*B3+A0*B4) * 2^{52*4} +$$

$$(A3*B0+A2*B1+A1*B2+A0*B3)*2^{52*3} + (A2*B0+A1*B1+A0*B2)*2^{52*2} +$$

$$(A1*B0+A0*B1)*2^{52*1} + A0*B0$$

where each coefficient can be up to 107 bits long.

The purpose of the instruction is therefore to compute the coefficients, and then sum them correctly to produce the number R' = R, in a 512 bit representation (radix 264). For this purpose, one embodiment of the invention introduces four new microoperations ($\mu$ops): mulassist1, mulassist2, mulassist3 and mulassist4: mulassist1/2/3/4 tmpzmm, a256, b256

In operation, each mulassist* $\mu$op first transforms the input operands a256/b256 into radix 252 representation (e.g., using wiring and selection logic). Each mulassist* $\mu$op then computes 4 x 105 bit values. Each of the four values is stored in a 128 bit lane of the resulting register as follows:

$$\text{mulassist1: } (A0B3+A1B2) \| (A0B2+A1B1) \| (A0B1+A1B0) \| (A0B0)$$

$$\text{mulassist2: } (A2B3+A1B4) \| (A1B3+A0B4) \| (A3B0+A2B1) \| (A2B0)$$

$$\text{mulassist3: } (A3B1+A2B2) \| (A4B1+A3B2) \| (A4B1+A3B2) \| (A4B3+A3B4)$$

$$\text{mulassist4: } (A4B0) \| (A2B4) \| (A4B4) \| 0$$

In the above representation, each 128 bit lane is separated by a $\|$ indicator. Lane 0 is the rightmost lane and Lane 3 is the leftmost lane, with Lanes 2 and 1 arranged sequentially in between.

In one embodiment, the multiplications and additions use the floating-point multiply-add (FMA) units available over execution ports 0 and 5 within the execution units 1240. Of course, the underlying principles of the invention are not limited to any particular set of execution ports. In some implementations, for example, the FMA units may be available on other ports.

**Figure 16** illustrates the specific manner in which operations may be performed for mulassist1 using a set of multiplication units 1600 and adders 1610. While details are shown only for mulassist1, the same basic principles may be implemented for mulassist2, mulassist3 and mulassist4.

As illustrated in **Figure 16,** using the A and B values provided above, 52x52-bit multiplier 1601 multiplies A1 and B2; multiplier 1602 multiplies A0 and B3; multiplier 1603 multiplies A1 and B1; multiplier 1604 multiplies A0 and B2; multiplier 1605 multiplies A1 and B0; multiplier 1606 multiplies A0 and B1; and multiplier 1607 multiplies A0 and B0.

The 104 x 104 adder 1611 then determines the sum of A1B2 and AOB3 and outputs the result to 128-bit Lane 3; adder 1612 determines the sum of A1B1 and AOB2 and outputs the result to 128-bit Lane 2; adder 1613 determines the sum of A1B0 and AOB1 and outputs the result to 128-bit Lane 1; and adder 1614 determines the sum of A0B0 and a value of zero to output A0B0 to 128-bit Lane 0.

In one embodiment, the four results may then be summed and transformed to a regular representation via additional hardware and microoperations. Note that the actual order of the operands may be modified based on design considerations.

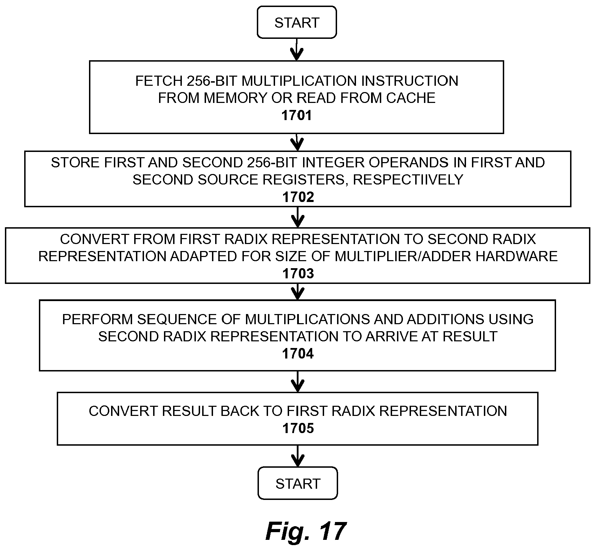

A method in accordance with one embodiment of the invention is illustrated in **Figure 17.** The method may be implemented within the architectures described above, but is not limited to any particular architecture.

At 1701, a 256-bit multiplication instruction is fetched from memory or read from a cache (e.g., such as vmul256to512 zmm1, zmm2, zmm3, imm8 or one of the other instructions highlighted above). At 1702, the first and second 256-bit integer operands are stored in first and second source registers, respectively. For example, if the source operand registers are 512-bit vector registers (e.g., ZMM2), then the first and second 256-bit integer source operands may be stored in the upper or lower halves of the registers (e.g., based on the value of imm8 in the implementation described above).

At 1703 the first and second source operands are converted from a first radix representation to a second radix representation based on the size of the multiplier and adder hardware. For example, as mentioned above, for an implementation which utilizes 52 bit multipliers, instead of looking at the numbers as 4 digits in radix 264, they may be treated as 5 digits in radix 252. At 1704, a sequence of multiplication and addition operations are performed using the second radix representation to arrive at a result (see, e.g., **Figure 16** and associated text). Finally, at 1705, the result is converted back to the first radix representation (e.g., and stored in a 512-bit destination register).

In the foregoing specification, the embodiments of invention have been described with reference to specific exemplary embodiments thereof. It will, however, be evident that various modifications and changes may be made thereto without departing from the broader scope of the invention as set forth in the appended claims. The specification and drawings are, accordingly, to be regarded in an illustrative rather than a restrictive sense.

Embodiments of the invention may include various steps, which have been described above. The steps may be embodied in machine-executable instructions which may be used to cause a general-purpose or special-purpose processor to perform the steps. Alternatively, these steps may be performed by specific hardware components that contain hardwired logic for performing the steps, or by any combination of programmed computer components and custom hardware components.

As described herein, instructions may refer to specific configurations of hardware such as application specific integrated circuits (ASICs) configured to perform certain operations or having a predetermined functionality or software instructions stored in memory embodied in a non-transitory computer readable medium. Thus, the techniques shown in the Figures can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical or other form of propagated signals - such as carrier waves, infrared signals, digital signals, etc.). In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the invention may be implemented using different combinations of software, firmware, and/or hardware. Throughout this detailed description, for the purposes of explanation, numerous specific details were set forth in order to provide a thorough understanding of the present invention. It will be apparent, however, to one skilled in the art that the invention may be practiced without some of these specific details. In certain instances, well known structures and functions were not described in elaborate detail in order to avoid obscuring the subject matter of the present invention. Accordingly, the scope of the invention should be judged in terms of the claims which follow.

**Claims**

**1.** A processor comprising:

a first source register to store a first 256-bit integer operand;
a second source register to store a second 256-bit integer operand; and
multiplication logic comprising:

decode logic to decode a 256-bit multiplication instruction specifying the first source register, the second source register, and an immediate value to select the first 256-bit integer operand from the first source register and the second 256-bit integer operand from the second source register in accordance with the immediate value; and

responsive to the 256-bit multiplication instruction, a set of multipliers and adders to perform a multiplication of the first and second 256-bit integer operands to generate a 512-bit result, wherein the multiplication is to convert a radix representation of the first and second 256-bit integer operands from a first radix representation to a second radix representation selected based on a size of the multipliers and adders used to perform the multiplication and generate a result, and then to convert the result back to the first radix representation.

2. The processor as in claim 1 wherein the first radix representation of each of the 256-bit integer operands comprises four digits represented in radix $2^{64}$.

3. The processor as in claim 2 wherein the second radix representation comprises five digits represented in radix $2^{52}$.

4. The processor as in claim 3 wherein each of the multipliers comprises a 52 x 52 multiplier.

5. The processor as in claim 4 wherein each of the multipliers is to multiply one of the five digits from the first 256-bit integer operand by one of the five digits of the second 256-bit integer operand.

6. The processor as in claim 5 wherein for digits A0, A1, A2, A3, and A4 from the first 256-bit integer operand and for digits B0, B1, B2, B3, and B4 of the second 256-bit integer operand:

a first multiplier is to multiply A1 and B2 to generate the product A1B2;
a second multiplier is to multiply A0 and B3 to generate the product AOB3;
a third multiplier is to multiply A1 and B1 to generate the product A1B1;
a fourth multiplier is to multiply A0 and B2 to generate the product AOB2;
a fifth multiplier is to multiply A1 and B0 to generate the product A1B0;
a sixth multiplier is to multiply A0 and B1 to generate the product A0B1; and
a seventh multiplier is to multiply A0 and B0 to generate the product A0B0.

7. The processor as in claim 6 wherein each of the adders is to add at least two of the results output by the multipliers.

8. The processor as in claim 7 further comprising:

a first adder to determine a first sum of A1B2 and A0B3;
a second adder to determine a second sum of A1B1 and A0B2;
a third adder to determine a third sum of A1B0 and A0B1; and
a fourth adder to determine a fourth sum of A0B0 and zero.

9. The processor as in claim 8 wherein each of the four sums is output to each of four different 128-bit lanes.

10. The processor as in claim 9 wherein the four sums in each of the 128-bit lanes are summed and transformed to a radix $2^{64}$ representation.

11. The processor as in claim 1 wherein the 256-bit multiplication instruction is decoded into a plurality of microoperations, the microoperations to perform a plurality of multiplication and sum operations using the second radix representation to generate the 512-bit result.

12. The processor as in claim 1 wherein the first and second source registers comprise 512-bit vector registers and wherein the first and second 256-bit integer operands are to be stored in an upper or lower region of the 512-bit vector registers.

13. The processor as in claim 12 wherein the immediate value of the 256-bit multiplication instruction indicates whether the first and second 256-bit integer operands are stored in the upper or lower halves of the first and second 512-bit vector registers, respectively.

**14.** A method comprising:

storing a first 256-bit integer operand in a first source register to store;
storing a second 256-bit integer operand in a second source register;
decoding a 256-bit multiplication instruction specifying the first source register, the second source register, and an immediate value to select the first 256-bit integer operand from the first source register and the second 256-bit integer operand from the second source register in accordance with the immediate value; and
responsive to the decoded 256-bit multiplication instruction, performing a multiplication of the first and second 256-bit integer operands using a set of multipliers and adders by converting a radix representation of the first and second 256-bit integer operands from a first radix representation to a second radix representation selected based on a size of the multipliers and adders used to perform the multiplication and generate a result, and then converting the result back to the first radix representation.

**15.** The method as in claim 14 wherein the first radix representation of each the 256-bit integer operands comprises four digits represented in radix $2^{64}$.

**Patentansprüche**

**1.** Prozessor, der Folgendes umfasst:

ein erstes Quellregister zum Speichern eines ersten ganzzahligen 256-Bit-Operanden;
ein zweites Quellregister zum Speichern eines zweiten ganzzahligen 256-Bit-Operanden und
eine Multiplikationslogik, die Folgendes umfasst:

eine Decodierungslogik zum Decodieren einer 256-Bit-Multiplikationsanweisung, die das erste Quellregister, das zweite Quellregister und einen unmittelbaren Wert spezifiziert, um den ersten ganzzahligen 256-Bit-Operanden aus dem ersten Quellregister und den zweiten ganzzahligen 256-Bit-Operanden aus dem zweiten Quellregister gemäß dem unmittelbaren Wert auszuwählen; und
in Reaktion auf die 256-Bit-Multiplikationsanweisung einen Satz von Multiplizierern und Addierern, um eine Multiplikation des ersten und des zweiten ganzzahligen 256-Bit-Operanden durchzuführen, um ein 512-Bit-Ergebnis zu erzeugen, wobei die Multiplikation eine Basisdarstellung des ersten und des zweiten ganzzahligen 256-Bit-Operanden aus einer ersten Basisdarstellung in eine zweite Basisdarstellung, die auf Basis einer Größe der Multiplizierer und Addierer, die verwendet werden, um die Multiplikation durchzuführen und ein Ergebnis zu erzeugen, ausgewählt wird, und dann das Ergebnis zurück in die erste Basisdarstellung umzuwandeln.

**2.** Prozessor nach Anspruch 1, wobei die erste Basisdarstellung jedes der ganzzahligen 256-Bit-Operanden vier Stellen umfasst, die in Basis $2^{64}$ dargestellt sind.

**3.** Prozessor nach Anspruch 2, wobei die zweite Basisdarstellung fünf Stellen umfasst, die in Basis $2^{52}$ dargestellt sind.

**4.** Prozessor nach Anspruch 3, wobei jeder der Multiplizierer einen 52 x 52-Multiplizierer umfasst.

**5.** Prozessor nach Anspruch 4, wobei jeder der Multiplizierer eine der fünf Stellen des ersten ganzzahligen 256-Bit-Operanden mit einer der fünf Stellen des zweiten ganzzahligen 256-Bit-Operanden multiplizieren soll.

**6.** Prozessor nach Anspruch 5, wobei für die Stellen A0, A1, A2, A3 und A4 des ersten ganzzahligen 256-Bit-Operanden und für die Stellen B0, B1, B2, B3 und B4 des zweiten ganzzahligen 256-Bit-Operanden Folgendes gilt:

ein erster Multiplizierer soll A1 und B2 multiplizieren, um das Produkt A1B2 zu erzeugen;
ein zweiter Multiplizierer soll A0 und B3 multiplizieren, um das Produkt A0B3 zu erzeugen;
ein dritter Multiplizierer soll A1 und B1 multiplizieren, um das Produkt A1B1 zu erzeugen;
ein vierter Multiplizierer soll A0 und B2 multiplizieren, um das Produkt A0B2 zu erzeugen;
ein fünfter Multiplizierer soll A1 und B0 multiplizieren, um das Produkt A1B0 zu erzeugen;
ein sechster Multiplizierer soll A0 und B1 multiplizieren, um das Produkt A0B1 zu erzeugen; und
ein siebter Multiplizierer soll A0 und B0 multiplizieren, um das Produkt A0B0 zu erzeugen.

7. Prozessor nach Anspruch 6, wobei jeder der Addierer mindestens zwei der von den Multiplizierern ausgegebenen Ergebnisse addieren soll.

8. Prozessor nach Anspruch 7, der ferner Folgendes umfasst:

   einen ersten Addierer, um eine erste Summe von A1B2 und A0B3 zu bestimmen;
   einen zweiten Addierer, um eine zweite Summe von A1B1 und A0B2 zu bestimmen;
   einen dritten Addierer, um eine dritte Summe von A1B0 und A0B1 zu bestimmen; und
   einen vierten Addierer, um eine vierte Summe von A0B0 und null zu bestimmen.

9. Prozessor nach Anspruch 8, wobei jede der vier Summen zu jeder von vier verschiedenen 128-Bit-Bahnen ausgegeben wird.

10. Prozessor nach Anspruch 9, wobei die vier Summen in jeder der 128-Bit-Bahnen summiert und zu einer Basis-$2^{64}$-Darstellung transformiert werden.

11. Prozessor nach Anspruch 1, wobei die 256-Bit-Multiplikationsanweisung in eine Vielzahl von Mikrooperationen decodiert wird, wobei die Mikrooperationen eine Vielzahl von Multiplikations- und Summierungsoperationen unter Verwendung der zweiten Basisdarstellung durchführen sollen, um das 512-Bit-Ergebnis zu erzeugen.

12. Prozessor nach Anspruch 1, wobei das erste und das zweite Quellregister 512-Bit-Vektorregister umfassen und wobei der erste und der zweite ganzzahlige 256-Bit-Operand in einem oberen oder einem unteren Bereich der 512-Bit-Vektorregister gespeichert werden sollen.

13. Prozessor nach Anspruch 12, wobei der unmittelbare Wert der 256-Bit-Multiplikationsanweisung anzeigt, ob der erste und der zweite ganzzahlige 256-Bit-Operand in der oberen oder der unteren Hälfte des ersten bzw. des zweiten 512-Bit-Vektorregisters gespeichert sind.

14. Verfahren, das Folgendes umfasst:

   Speichern eines ersten ganzzahligen 256-Bit-Operanden in einem ersten Quellregister zum Speichern;
   Speichern eines zweiten ganzzahligen 256-Bit-Operanden in einem zweiten Quellregister;
   Decodieren einer 256-Bit-Multiplikationsanweisung, die das erste Quellregister, das zweite Quellregister und einen unmittelbaren Wert spezifiziert, um den ersten ganzzahligen 256-Bit-Operanden aus dem ersten Quellregister und den zweiten ganzzahligen 256-Bit-Operanden aus dem zweiten Quellregister gemäß dem unmittelbaren Wert auszuwählen; und
   in Reaktion auf die decodierte 256-Bit-Multiplikationsanweisung Durchführen einer Multiplikation des ersten und des zweiten ganzzahligen 256-Bit-Operanden unter Verwendung eines Satzes von Multiplizierern und Addierern durch Umwandeln einer Basisdarstellung des ersten und des zweiten ganzzahligen 256-Bit-Operanden aus einer ersten Basisdarstellung in eine zweite Basisdarstellung, die auf Basis einer Größe der Multiplizierer und Addierer, die verwendet werden, um die Multiplikation durchzuführen und ein Ergebnis zu erzeugen, ausgewählt wird, und dann Umwandeln des Ergebnisses zurück in die erste Basisdarstellung.

15. Verfahren nach Anspruch 14, wobei die erste Basisdarstellung jedes der ganzzahligen 256-Bit-Operanden vier Stellen umfasst, die in Basis $2^{64}$ dargestellt sind.

**Revendications**

1. Processeur, comprenant :

   un premier registre source servant à mémoriser un premier opérande entier de 256 bits ;
   un deuxième registre source servant à mémoriser un deuxième opérande entier de 256 bits ; et
   une logique de multiplication comprenant :

   une logique de décodage servant à décoder une instruction de multiplication sur 256 bits stipulant le premier registre source, le deuxième registre source et une valeur immédiate afin de sélectionner le premier opérande entier de 256 bits à partir du premier registre source et le deuxième opérande entier de 256 bits à partir du deuxième registre source conformément à la valeur immédiate ; et

en réponse à l'instruction de multiplication sur 256 bits, un ensemble de multiplieurs et d'additionneurs servant à réaliser une multiplication des premier et deuxième opérandes entiers de 256 bits afin de générer un résultat sur 512 bits, la multiplication servant à convertir une représentation en base des premier et deuxième opérandes entiers de 256 bits d'une première représentation en base en une deuxième représentation en base sélectionnée en fonction d'une taille des multiplieurs et des additionneurs utilisés pour réaliser la multiplication et générer un résultat, puis à reconvertir le résultat en la première représentation en base.

**2.** Processeur selon la revendication 1, dans lequel la première représentation en base de chacun des opérandes entiers de 256 bits comprend quatre chiffres représentés en base $2^{64}$.

**3.** Processeur selon la revendication 2, dans lequel la deuxième représentation en base comprend cinq chiffres représentés en base $2^{52}$.

**4.** Processeur selon la revendication 3, dans lequel chacun des multiplieurs comprend un multiplieur 52 x 52.

**5.** Processeur selon la revendication 4, dans lequel chacun des multiplieurs sert à multiplier l'un des cinq chiffres issus du premier opérande entier de 256 bits par l'un des cinq chiffres du deuxième opérande entier de 256 bits.

**6.** Processeur selon la revendication 5, dans lequel, pour des chiffres A0, A1, A2, A3 et A4 issus du premier opérande entier de 256 bits et pour des chiffres B0, B1, B2, B3 et B4 du deuxième opérande entier de 256 bits :

un premier multiplieur sert à multiplier A1 et B2 afin de générer le produit A1B2 ;
un deuxième multiplieur sert à multiplier A0 et B3 afin de générer le produit A0B3 ;
un troisième multiplieur sert à multiplier A1 et B1 afin de générer le produit A1B1 ;
un quatrième multiplieur sert à multiplier A0 et B2 afin de générer le produit A0B2 ;
un cinquième multiplieur sert à multiplier A1 et B0 afin de générer le produit A1B0 ;
un sixième multiplieur sert à multiplier A0 et B1 afin de générer le produit A0B1 ; et
un septième multiplieur sert à multiplier A0 et B0 afin de générer le produit A0B0.

**7.** Processeur selon la revendication 6, dans lequel chacun des additionneurs sert à additionner au moins deux des résultats délivrés par les multiplieurs.

**8.** Processeur selon la revendication 7, comprenant en outre :

un premier additionneur servant à déterminer une première somme de A1B2 et de A0B3 ;
un deuxième additionneur servant à déterminer une deuxième somme de A1B1 et de A0B2 ;
un troisième additionneur servant à déterminer une troisième somme de A1B0 et de A0B1 ; et
un quatrième additionneur servant à déterminer une quatrième somme de A0B0 et de zéro.

**9.** Processeur selon la revendication 8, dans lequel chacune des quatre sommes est délivrée à chacune de quatre voies de 128 bits différentes.

**10.** Processeur selon la revendication 9, dans lequel les quatre sommes dans chacune des voies de 128 bits sont sommées et transformées en une représentation en base $2^{64}$.

**11.** Processeur selon la revendication 1, dans lequel l'instruction de multiplication sur 256 bits est décodée en une pluralité de micro-opérations, les micro-opérations servant à réaliser une pluralité d'opérations de multiplication et de somme à l'aide de la deuxième représentation en base afin de générer le résultat sur 512 bits.

**12.** Procédé selon la revendication 1, dans lequel les premier et deuxième registres sources comprennent des registres vectoriels de 512 bits, et dans lequel les premier et deuxième opérandes entiers de 256 bits sont appelés à être mémorisés dans une région supérieure ou inférieure des registres vectoriels de 512 bits.

**13.** Processeur selon la revendication 12, dans lequel la valeur immédiate de l'instruction de multiplication sur 256 bits indique si les premier et deuxième opérandes entiers de 256 bits sont respectivement mémorisés dans les moitiés supérieure ou inférieure des premier et deuxième registres vectoriels de 512 bits.

**14.** Procédé, comprenant :

la mémorisation d'un premier opérande entier de 256 bits dans un premier registre source servant à mémoriser ;
la mémorisation d'un deuxième opérande entier de 256 bits dans un deuxième registre source ;
une logique de multiplication comprenant :

le décodage d'une instruction de multiplication sur 256 bits stipulant le premier registre source, le deuxième registre source et une valeur immédiate afin de sélectionner le premier opérande entier de 256 bits à partir du premier registre source et le deuxième opérande entier de 256 bits à partir du deuxième registre source conformément à la valeur immédiate ; et
en réponse à l'instruction de multiplication sur 256 bits décodée, la réalisation d'une multiplication des premier et deuxième opérandes entiers de 256 bits à l'aide d'un ensemble de multiplieurs et d'additionneurs par conversion d'une représentation en base des premier et deuxième opérandes entiers de 256 bits d'une première représentation en base en une deuxième représentation en base sélectionnée en fonction d'une taille des multiplieurs et des additionneurs utilisés pour réaliser la multiplication et générer un résultat, puis la reconversion du résultat en la première représentation en base.

**15.** Procédé selon la revendication 14, dans lequel la première représentation en base de chacun des opérandes entiers de 256 bits comprend quatre chiffres représentés en base $2^{64}$.

**FIG.1A**

← FULL OPCODE FIELD 174 →

| FORMAT FIELD 140 | BASE OPERATION FIELD 142 | REGISTER INDEX FIELD 144 | MODIFIER FIELD 146 | AUGMENTATION OPERATION FIELD 150 | | | SCALE FIELD 160 | DISP. F. 162A / DISP. F. F. 162B | DATA ELEMENT WIDTH FIELD 164 | WRITE MASK FIELD 170 | IMMEDIATE FIELD 172 |
|---|---|---|---|---|---|---|---|---|---|---|---|
| | | | | CLASS FIELD 168 | ALPHA FIELD 152 | BETA FIELD 154 | | | | | |

GENERIC VECTOR FRIENDLY INSTRUCTION FORMAT 100

NO MEMORY ACCESS 105

NO MEMORY ACCESS, FULL ROUND CNTRL TYPE OP. 110

RS FIELD 152A

| FORMAT FIELD 140 | BASE OPERATION FIELD 142 | REGISTER INDEX FIELD 144 | NO MEMORY ACCESS 146A | CLASS A 168A | ROUND 152A.1 | ROUND CONTROL FIELD 154A | | DATA ELEMENT WIDTH FIELD 164 | WRITE MASK FIELD 170 | IMMEDIATE FIELD 172 |
|---|---|---|---|---|---|---|---|---|---|---|
| | | | | | | SAE FIELD 156 | ROUND OPERATION FIELD 158 | | | |

NO MEMORY ACCESS, DT TYPE OPERATION 115

| FORMAT FIELD 140 | BASE OPERATION FIELD 142 | REGISTER INDEX FIELD 144 | NO MEMORY ACCESS 146A | CLASS A 168A | DATA TRANSFORM 152A.2 | DATA TRANSFORM FIELD 154B | DATA ELEMENT WIDTH FIELD 164 | WRITE MASK FIELD 170 | IMMEDIATE FIELD 172 |
|---|---|---|---|---|---|---|---|---|---|

MEMORY ACCESS 120

MEMORY ACCESS, TEMPORAL 125

EVICTION HINT (EH) FIELD 152B

| FORMAT FIELD 140 | BASE OPERATION FIELD 142 | REGISTER INDEX FIELD 144 | MEMORY ACCESS 146B | CLASS A 168A | TEMPORAL 152B.1 | DATA MANIPULATION FIELD 154C | SCALE FIELD 160 | DISP. F. 162A / DISP. F. F. 162B | DATA ELEMENT WIDTH FIELD 164 | WRITE MASK FIELD 170 | IMMEDIATE FIELD 172 |
|---|---|---|---|---|---|---|---|---|---|---|---|

MEMORY ACCESS, NONTEMPORAL 130

| FORMAT FIELD 140 | BASE OPERATION FIELD 142 | REGISTER INDEX FIELD 144 | MEMORY ACCESS 146B | CLASS A 168A | NON-TEMPORAL 152B.2 | DATA MANIPULATION FIELD 154C | SCALE FIELD 160 | DISP. F. 162A / DISP. F. F. 162B | DATA ELEMENT WIDTH FIELD 164 | WRITE MASK FIELD 170 | IMMEDIATE FIELD 172 |
|---|---|---|---|---|---|---|---|---|---|---|---|

EP 3 238 022 B1

**FIG.1B**

FULL OPCODE FIELD 174

| FORMAT FIELD 140 | BASE OPERATION FIELD 142 | REGISTER INDEX FIELD 144 | MODIFIER FIELD 146 | AUGMENTATION OPERATION FIELD 150 | | | SCALE FIELD 160 | DISP. F. 162A / DISP. F. F. 162B | DATA ELEMENT WIDTH FIELD 164 | WRITE MASK FIELD 170 | IMMEDIATE FIELD 172 |
|---|---|---|---|---|---|---|---|---|---|---|---|
| | | | | CLASS FIELD 168 | ALPHA FIELD 152 | BETA FIELD 154 | | | | | |

GENERIC VECTOR FRIENDLY INSTRUCTION FORMAT 100

NO MEMORY ACCESS 105

NO MEM. ACC., W.M.C., PART. RND. CNTRL. TYPE OP. 112

RL FIELD 157A

| FORMAT FIELD 140 | BASE OPERATION FIELD 142 | REGISTER INDEX FIELD 144 | NO MEMORY ACCESS 146A | CLASS B 168B | WRITE MASK CONTROL FIELD 152C | RND 157A.1 | ROUND OPERATION FIELD 159A | DATA ELEMENT WIDTH FIELD 164 | WRITE MASK FIELD 170 | IMMEDIATE FIELD 172 |
|---|---|---|---|---|---|---|---|---|---|---|

NO MEM. ACC., W.M.C., VSIZE TYPE OP. 117

| FORMAT FIELD 140 | BASE OPERATION FIELD 142 | REGISTER INDEX FIELD 144 | NO MEMORY ACCESS 146A | CLASS B 168B | WRITE MASK CONTROL FIELD 152C | VSIZE 157A.2 | VECTOR LENGTH FIELD 159B | DATA ELEMENT WIDTH FIELD 164 | WRITE MASK FIELD 170 | IMMEDIATE FIELD 172 |
|---|---|---|---|---|---|---|---|---|---|---|

MEMORY ACCESS 120

MEM. ACC, W.M.C., 127

| FORMAT FIELD 140 | BASE OPERATION FIELD 142 | REGISTER INDEX FIELD 144 | MEMORY ACCESS 146B | CLASS B 168B | WRITE MASK CONTROL FIELD 152C | BROADCAST FIELD 157B | VECTOR LENGTH FIELD 159B | SCALE FIELD 160 | DISP. F. 162A / DISP. F. F. 162B | DATA ELEMENT WIDTH FIELD 164 | WRITE MASK FIELD 170 | IMMEDIATE FIELD 172 |
|---|---|---|---|---|---|---|---|---|---|---|---|---|

**FIG. 2A**

EVEX PREFIX 202

MOD R/M BYTE

| MOD 242 | REG 244 | R/M 246 |
|---|---|---|

7 65 32 0

SIB BYTE

| SS 252 | XXX 254 | BBB 256 |
|---|---|---|

7 65 32 0

DATA ELEMENT WIDTH FIELD QAB64

CLASS FIELD QAB68

REX' 210

BETA FIELD QAB54

REX' 210

| 0x62 | R X B R' | M M M M | W | V V V V | U | P P | α | β β β | V' | K K K | Y Y Y Y Y Y Y Y | MOD R/M | SIB | D D D D | IMM8 |

FORMAT FIELD QAB40

REX 205

OPCODE MAP 215

VVVV FIELD 220

ALPHA FIELD QAB52

PREFIX ENCODING FIELD 225

WRITE MASK FIELD QAB70

REAL OPCODE FIELD 230

240  250

QAB72

DISPLACEMENT FIELD QAB62A (DISP32 WHEN MOD=10)

DISPLACEMENT FACTOR FIELD QAB62B (DISP8*N WHEN MOD=01). REFERRED TO AS DISP8*N, BUT HOLDS ONLY THE DISPLACEMENT FACTOR WHICH IS MULTIPLIED BY N

SPECIFIC VECTOR FRIENDLY INSTRUCTION FORMAT 200

**FIG. 2B**

FULL OPCODE FIELD QAB74

OPCODE MAP 215

FORMAT FIELD QAB40

DATA ELEMENT WIDTH FIELD QAB64

| 0x62 | P P | M M M M | W | Y Y Y Y Y Y Y Y |

PREFIX ENCODING FIELD 225

BASE OPERATION FIELD QAB42

REAL OPCODE FIELD 230

**FIG. 2C**

REGISTER INDEX FIELD QAB44

| R X B R' | V' | REG | R/M | V V V V | XXX | BBB |

REX 205

REX' 210

244  246

VVVV FIELD 220

254  256

EP 3 238 022 B1

**FIG. 2D**

CLASS FIELD 168    ALPHA FIELD 152    BETA FIELD 154

AUGMENTATION OPERATION FIELD 150

| U | α | β | β | β |

**U=0**

RS FIELD 152A
| α | β | β | β |

ROUND 152A.1
SAE FIELD 156
| 1 | r₂ | r₁ | r₀ |
ROUND OPERATION FIELD 158
ROUND CONTROL FIELD 154A

MOD FIELD QAC42
| 11 |

RS FIELD 152A
| α | β | β | β |

DATA TRANSFORM 152A.2
| 0 | s₂ | s₁ | s₀ |
DATA TRANSFORM FIELD 154B

| α | β | β | β |

EVICTION HINT FIELD 152B
| EH | s₂ | s₁ | s₀ |

MOD FIELD QAC42
| 00 | OR | 01 | OR | 10 |
162A

| SIB | D | D | D | D |
QAC50    162B
DATA MANIPULATION FIELD 154C

**U=1**

WRITE MASK CONTROL FIELD 152C
| α |

MERGING
| 0 |

ZEROING
| 1 |

| β | β | β | RL FIELD 157A

MOD FIELD QAC42
| 11 |

| β | β | β | RL FIELD 157A

| r₁ | r₀ | 1 | ROUND 157A.1
ROUND OPERATION FIELD 159A

| L₁ | L₀ | 0 | VSIZE 157A.2
VECTOR LENGTH FIELD 159B

MOD FIELD QAC42
| 00 | OR | 01 | OR | 10 |
162A

| β | β | β |

| L₁ | L₀ | B | SIB | D | D | D | D |
QAC50    162B
VECTOR LENGTH FIELD 159B        BROADCAST FIELD 157B

REGISTER ARCHITECTURE 300

**FIG. 3**

SCALAR FP STACK REGISTER FILE 345
(X87FP)

80 BITS

| | 0 |
|---|---|
| ALIASED | |
| | 7 |

64 BITS
MMX PACKED INT FLAT
REGISTER FILE 350

General Purpose Registers 325
16 X 64 BITS

Vector Registers 310

512 BITS

$zmm_0$   $ymm_0$   $xmm_0$

$ymm_{15}$   $xmm_{15}$

128 BITS

256 BITS

$zmm_{31}$

Write Mask Registers 315
64 BITS

$k_0$

$k_7$

EP 3 238 022 B1

**FIG. 4A**

| FETCH 402 | LENGTH DECODING 404 | DECODE 406 | ALLOC. 408 | RENAMING 410 | SCHEDULE 412 | REGISTER READ/ MEMORY READ 414 | EXECUTE STAGE 416 | WRITE BACK/ MEMORY WRITE 418 | EXCEPTION HANDLING 422 | COMMIT 424 |

CORE 490

**FIG. 4B**

FRONT END UNIT 430

BRANCH PREDICTION UNIT 432

INSTRUCTION CACHE UNIT 434

INSTRUCTION TLB UNIT 436

INSTRUCTION FETCH 438

DECODE UNIT 440

EXECUTION ENGINE UNIT 450

RENAME / ALLOCATOR UNIT 452

RETIREMENT UNIT 454

SCHEDULER UNIT(S) 456

PHYSICAL REGISTER FILES UNIT(S) 458

EXECUTION UNIT(S) 462

MEMORY ACCESS UNIT(S) 464

EXECUTION CLUSTER(S) 460

MEMORY UNIT 470

DATA TLB UNIT 472

DATA CACHE UNIT 474

L2 CACHE UNIT 476

## FIG. 5A

INSTRUCTION DECODE
500

SCALAR
UNIT
508

VECTOR
UNIT
510

SCALAR
REGISTERS
512

VECTOR
REGISTERS
514

L1 CACHE
506

LOCAL SUBSET OF THE L2
CACHE
504

RING NETWORK
502

## FIG. 5B

WRITE MASK REGISTERS
526

16-WIDE VECTOR ALU
528

REPLICATE
524

SWIZZLE
520

VECTOR
REGISTERS
514

NUMERIC
CONVERT
522A

NUMERIC
CONVERT
522B

L1 DATA CACHE
506A

PROCESSOR 600

SPECIAL PURPOSE LOGIC 608

CORE 602A
CACHE UNIT(S) 604A

CORE 602N
CACHE UNIT(S) 604N

SHARED CACHE UNIT(S) 606

RING 612

SYSTEM AGENT UNIT 610
INTEGRATED MEMORY CONTROLLER UNIT(S) 614

BUS CONTROLLER UNIT(S) 616

FIG. 6

FIG. 7

FIG. 8

FIG. 9

**FIG. 10**

SYSTEM ON A CHIP
1000

**APPLICATION PROCESSOR 1010**

CORE 602A
CACHE
UNIT(S)
604A

- - -

CORE 602N
CACHE
UNIT(S)
604N

SHARED CACHE UNIT(S) 606

SYSTEM AGENT
UNIT 610

COPROCESSOR(S) 1020

INTERCONNECT UNIT(S) 1002

BUS
CONTROLLER
UNIT(S) 616

INTEGRATED
MEMORY
CONTROLLER
UNIT(S) 614

SRAM UNIT
1030

DMA UNIT 1032

DISPLAY UNIT
1040

FIG. 11

PROCESSOR WITHOUT AN X86
INSTRUCTION SET CORE 1114

PROCESSOR WITH AT
LEAST ONE X86
INSTRUCTION SET CORE
1116

HARDWARE

SOFTWARE

ALTERNATIVE
INSTRUCTION SET
BINARY CODE 1110

INSTRUCTION
CONVERTER 1112

X86 BINARY CODE 1106

ALTERNATIVE
INSTRUCTION SET
COMPILER 1108

X86 COMPILER 1104

HIGH LEVEL LANGUAGE 1102

EP 3 238 022 B1

37

**Fig. 12**

SOURCE (e.g., YMM2)
**1301**

SOURCE (e.g., YMM3)
**1302**

| 255:0 |
|---|

| 255:0 |
|---|

256-bit Multiplication Logic
**1300**

| 511:0 |
|---|

DESTINATION REGISTER (e.g., ZMM1)
**1303**

*Fig. 13*

SOURCE (e.g., ZMM2)
**1401**

SOURCE (e.g., ZMM3)
**1402**

| 511:256 | 255:0 |
|---------|-------|

| 511:256 | 255:0 |
|---------|-------|

256-bit Multiplication Logic
**1300**

| 511:0 |
|-------|

DESTINATION REGISTER (e.g., ZMM1)
**1303**

*Fig. 14*

SOURCE (e.g., ZMM2)
**1401**

SOURCE (e.g., ZMM3)
**1402**

| 511:256 | 255:0 |
|---|---|

| 511:256 | 255:0 |
|---|---|

256-bit Multiplication Logic
**1300**

IMM VALUE
**1500**

| 511:0 |
|---|

DESTINATION REGISTER (e.g., ZMM1)
**1303**

*Fig. 15*

| B'3 | B'2 | B'1 | B'0 |
|---|---|---|---|

| A'3 | A'2 | A'1 | A'0 |
|---|---|---|---|

| B4 = B'(255:208) | B3 = B'(207:156) | B2 = B'(155:104) | B1 = B'(103:52) | B0 = B'(51:0) |
|---|---|---|---|---|

| A4 = B'(255:208) | A3 = B'(207:156) | A2 = B'(155:104) | A1 = B'(103:52) | A0 = B'(51:0) |
|---|---|---|---|---|

1600

| 52x52 MULTIPLIER | 52x52 MULTIPLIER 1601 | 52x52 MULTIPLIER 1602 | 52x52 MULTIPLIER 1603 | 52x52 MULTIPLIER 1604 | 52x52 MULTIPLIER 1605 | 52x52 MULTIPLIER 1606 | 52x52 MULTIPLIER 1607 |
|---|---|---|---|---|---|---|---|

A1xB2    A0xB3    A1xB1    A0xB2    A1xB0    A0xB1    A0xB0    ZERO

1610

| 104x104 ADDER | 104x104 ADDER 1611 | 104x104 ADDER | 104x104 ADDER 1612 | 104x104 ADDER | 104x104 ADDER 1613 | 104x104 ADDER | 104x104 ADDER 1614 |
|---|---|---|---|---|---|---|---|

| Lane3=A1B2+A0B3 | Lane2=A1B1+A0B2 | Lane1=A1B0+A0B1 | Lane0=A0B0 |
|---|---|---|---|

**FIG. 16**

```
                        ┌─────────────┐
                        │    START    │
                        └──────┬──────┘
                               │
                               ▼
        ┌──────────────────────────────────────────────┐
        │   FETCH 256-BIT MULTIPLICATION INSTRUCTION    │
        │       FROM MEMORY OR READ FROM CACHE          │
        │                    1701                       │
        └──────────────────────┬───────────────────────┘
                               │
                               ▼
    ┌──────────────────────────────────────────────────────┐
    │  STORE FIRST AND SECOND 256-BIT INTEGER OPERANDS      │
    │      IN FIRST AND SECOND SOURCE REGISTERS,            │
    │                RESPECTIIVELY                          │
    │                    1702                               │
    └──────────────────────────┬───────────────────────────┘
                               │
                               ▼
  ┌────────────────────────────────────────────────────────────┐
  │   CONVERT FROM FIRST RADIX REPRESENTATION TO SECOND RADIX   │
  │   REPRESENTATION ADAPTED FOR SIZE OF MULTIPLIER/ADDER       │
  │                      HARDWARE                               │
  │                        1703                                │
  └────────────────────────────┬───────────────────────────────┘
                               │
                               ▼
    ┌──────────────────────────────────────────────────────┐
    │  PERFORM SEQUENCE OF MULTIPLICATIONS AND ADDITIONS     │
    │   USING SECOND RADIX REPRESENTATION TO ARRIVE AT       │
    │                   RESULT                               │
    │                    1704                               │
    └──────────────────────────┬───────────────────────────┘
                               │
                               ▼
      ┌───────────────────────────────────────────────────┐
      │  CONVERT RESULT BACK TO FIRST RADIX REPRESENTATION │
      │                      1705                          │
      └─────────────────────────┬─────────────────────────┘
                               │
                               ▼
                        ┌─────────────┐
                        │    START    │
                        └─────────────┘
```

*Fig. 17*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2014006755 A1

**Non-patent literature cited in the description**

• **DARREL HANKERSON et al.** Guide to Elliptic Curve Cryptography - Section 5.1. *Guide to Elliptic Curve Cryptography,* 205-224

• Intel® 64 and IA-32 Architectures Software Developers Manual. October 2011
• Intel® Advanced Vector Extensions Programming Reference. June 2011